# EUROPEAN PATENT SPECIFICATION

(11) **EP 3 241 129 B1**
(45) Date of publication and mention of the grant of the patent: **09.09.2020**
(21) Application number: 15875562.9
(22) Date of filing: 11.12.2015
(51) Int. Cl.: H04L 29/06, G06F 21/62

(54) **USER TERMINAL, SERVICE PROVIDING APPARATUS, DRIVING METHOD OF USER TERMINAL, DRIVING METHOD OF SERVICE PROVIDING APPARATUS, AND ENCRYPTION INDEXING-BASED SEARCH SYSTEM**
BENUTZERENDGERÄT, DIENSTBEREITSTELLUNGSVORRICHTUNG, ANSTEUERUNGSVERFAHREN FÜR BENUTZERENDGERÄT, ANSTEUERUNGSVERFAHREN EINER DIENSTBEREITSTELLUNGSVORRICHTUNG UND AUF VERSCHLÜSSELUNGSINDEXIERUNG BASIERENDES SUCHSYSTEM
TERMINAL UTILISATEUR, APPAREIL DE FOURNITURE DE SERVICES, PROCÉDÉ DE COMMANDE DE TERMINAL UTILISATEUR, PROCÉDÉ DE COMMANDE D'APPAREIL DE FOURNITURE DE SERVICES, ET SYSTÈME DE RECHERCHE À BASE D'INDEXATION DE CHIFFREMENT

(30) Priority: 29.12.2014 KR 20140191775
(43) Date of publication of application: 08.11.2017
(73) Proprietor: Samsung Electronics Co., Ltd., Gyeonggi-do 16677 (KR)
(72) Inventor: KIM, Yu-na, Suwon-si Gyeonggi-do 16543 (KR); SEO, Jae-woo, Suwon-si Gyeonggi-do 16590 (KR); LEE, Ho-jung, Seoul 05409 (KR); KANG, Hyuk, Yongin-si Gyeonggi-do 16846 (KR); SONG, Ga-jin, Anyang-si Gyeonggi-do 14102 (KR); CHUN, Jae-bong, Suwon-si Gyeonggi-do 16527 (KR); CHOI, Gyu-cheol, Yongin-si Gyeonggi-do 16951 (KR)
(74) Representative: Gulde & Partner
(86) International application number: PCT/KR2015/013562
(87) International publication number: WO 2016/108468

(56) References cited:
- US-A1- 2009 300 351
- US-A1- 2011 072 015
- US-A1- 2012 042 332
- US-A1- 2013 046 974
- US-A1- 2013 051 772
- US-A1- 2014 045 511
- US-B2- 8 762 384

## Description

### Technical Field

The present disclosure relates to a user terminal, a service providing apparatus, a driving method of a user terminal, a driving method of a service providing apparatus, and an encryption indexing-based search system. More particularly, the present disclosure relates to a user terminal, a service providing apparatus, a driving method of a user terminal, a driving method of a service providing apparatus, and an encryption indexing-based search system, which can safely and easily search and use contents stored in a user's terminal using a cloud service.

### Background Art

As storage devices storing users' data are increasingly used, various mechanisms for managing and searching data from the users' storage devices are developing. Devices like a laptop computer, a desktop computer, a tablet personal computer (PC), a mobile phone, etc. store and manage a large amount of user data.

Today, most of the information extraction methods use localized search methods. For example, when a user searches content stored in the user's own mobile phone, the mobile phone performs the requested search and provides the search results to the user.

In addition, a semantic search service which provides user-customized search results by considering user's intention and context has been introduced and used in many popular search engines. For example, when a user searches under "Lake Tahoe", the semantic search service provides main attributes such as location, altitude, average temperature, and salt levels of Lake Tahoe rather than providing only a relevant link list, or directly provides answers rather than linking to a question-type search like "What is the 10th largest lake in California?"

In general, in order to use content stored in a multi device, the user should search and find the content in the user's own multi device. To solve this problem, a data searching method and apparatus of the related art provides a cloud service to easily search data stored in a plurality of devices owned by a user.

### Disclosure of Invention

### Technical Problem

However, since the method of the related art provides content of all of the multi devices and indexes of the contents to the cloud, there is a problem that, when the cloud is exposed to a malicious action, all of the user's content is leaked. When data needs to be shared on the cloud, there is a risk that personal data is leaked.

The above information is presented as background information only to assist with an understanding of the present disclosure. No determination has been made, and no assertion is made, as to whether any of the above might be applicable as prior art with regard to the present disclosure.

US2013046974 discloses a client device which comprises a data store with a file collection comprising files and keywords, and transmits an encrypted index to a remote repository. US2009300351 discloses encrypted files, metadata and an index, which are stored by a data owner on a remote server. The data owner issues data authorizing a search to be performed using the encrypted index.

### Solution to Problem

The invention relates to a user terminal and a method as defined in independent claims 1 and 7, respectively.

Particular embodiments are defined in the dependent claims.

### Brief Description of Drawings

The above and other aspects, features, and advantages of certain embodiments of the present disclosure will be more apparent from the following description taken in conjunction with the accompanying drawings, in which:
FIG. 1 is a view showing an encryption indexing-based search system according to an embodiment of the present disclosure;
FIG. 2 is a view showing a data structure of indexing information according to an embodiment of the present disclosure;
FIG. 3A is a view showing a search scenario between devices of the same user according to an embodiment of the present disclosure;
FIG. 3B is a view showing a scenario in which indexing information is shared and searched by changing a search term between different users according to an embodiment of the present disclosure;
FIG. 4 is a view to illustrate providing same search results to every device without synchronizing contents according to an embodiment of the present disclosure;
FIG. 5 is a view to illustrate providing standardized search results according to an embodiment of the present disclosure;
FIG. 6 is a block diagram showing a detailed configuration of a user terminal of FIG. 1;
FIG. 7 is a view showing an example of search results displayed on a display of FIG. 6;
FIG. 8 is a block diagram showing another detailed configuration of the user terminal of FIG. 1;
FIG. 9 is a view showing an example of an architecture of a program stored in an indexing information processor of FIG. 8;
FIG. 10 is a block diagram showing a detailed configuration of a service providing apparatus of FIG. 1;
FIG. 11A is a block diagram showing another detailed configuration of the service providing apparatus of FIG. 1;
FIG. 11B is a view showing an example of a structure of a program included in an index search execution unit of FIG. 11A;
FIG. 12 is a view showing an index generation process according to an embodiment of the present disclosure;
FIG. 13A is a flowchart showing an indexing information generation process in the user terminal of FIG. 12;
FIGS. 13B is a view showing a structure of first indexing information of FIG. 13A;
FIG. 14A is a flowchart showing an indexing information table generation process of the service providing apparatus of FIG. 12;
FIG. 14B is a view showing a structure of second indexing information of FIG. 14A;
FIG. 15 is a view showing a process of searching indexing information using a user terminal according to an embodiment of the present disclosure;
FIG. 16 is a view showing a process of searching data using an Software (SW) module in a user terminal and a service providing apparatus according to an embodiment of the present disclosure;
FIG. 17 is a view showing a process of sharing indexing information between different users according to an embodiment of the present disclosure;
FIG. 18 is a view showing a process of generating a search database (DB) for sharing according to an embodiment of the present disclosure;
FIG. 19 is a view showing a process of accessing after searching a shared file according to an embodiment of the present disclosure;
FIG. 20 is a view showing a process of searching and access a filer of a sharer using an SW module in detail according to an embodiment of the present disclosure;
FIG. 21 is a view showing a process of modifying meta information according to an embodiment of the present disclosure;
FIG. 22 is a view showing a security level modifying process according to an embodiment of the present disclosure;
FIG. 23 is a view showing a process of modifying a security level of a sharer and meta information using an SW module in detail according to an embodiment of the present disclosure;
FIG. 24 is a view showing a unsharing process according to an embodiment of the present disclosure;
FIG. 25 is a view showing a process of deleting information in a sharing search DB using an SW module according to an embodiment of the present disclosure;
FIG. 26 is a view showing a process of deleting original data according to an embodiment of the present disclosure;
FIG. 27 is a view showing a process of deleting indexing information, which is accompanied by deletion of data of a user terminal according to an embodiment of the present disclosure;
FIGS. 28A, 28B, and 28C are views showing a process of deleting indexing information, which is accompanied by deletion of data of a service providing apparatus according to various embodiments of the present disclosure;
FIG. 29 is a view showing a content accessing scenario considering a characteristic and a location of a device according to an embodiment of the present disclosure;
FIG. 30 is a view to illustrate a control processing process when a terminal requesting a content and a terminal providing a content exist within a local area according to an embodiment of the present disclosure;
FIG. 31 is a view showing a search device and a result device which are separated from each other according to an embodiment of the present disclosure;
FIG. 32 is a view showing a scenario for using a content when a content source device is in an off state according to an embodiment of the present disclosure;
FIG. 33 is a view showing a scenario when a device is changed or lost according to an embodiment of the present disclosure;
FIGS. 34A and 34B are views showing a security level generation scenario according to various embodiments of the present disclosure;
FIG. 35 is a view showing a recommendation screen of a security level according to an embodiment of the present disclosure;
FIG. 36 is a view to illustrate a security level which is determined according to a report format according to an embodiment of the present disclosure;
FIG. 37 is a view showing a scenario of a process of searching encrypted indexing information through voice recognition according to an embodiment of the present disclosure;
FIG. 38 is a view showing a scenario of a process of generating new indexing information with respect to a shared file according to an embodiment of the present disclosure;
FIG. 39 is a view showing a scenario of splitting and displaying search results according to an embodiment of the present disclosure;
FIG. 40 is a view showing a scenario of displaying search results on a common device according to a security level according to an embodiment of the present disclosure;
FIG. 41 is a view showing a scenario of analyzing search results and showing a result of analysis according to an embodiment of the present disclosure;
FIG. 42 is a view showing a scenario of sharing an authorized device or material according to an embodiment of the present disclosure;
FIG. 43 is a view showing a scenario of showing a part of the search results when a storage location of a content is in an external device according to an embodiment of the present disclosure;
FIG. 44 is a view showing a search method using an auxiliary module according to an embodiment of the present disclosure;
FIG. 45 is a view to illustrate user authentication according to an embodiment of the present disclosure;
FIG. 46A is a view to illustrate access authority control of a user terminal according to an embodiment of the present disclosure;
FIG. 46B is a view to illustrate access control of a device according to data according to an embodiment of the present disclosure;
FIG. 47 is a flowchart showing a driving process of a user terminal according to an embodiment of the present disclosure; and
FIG. 48 is a flowchart showing a driving process of a service providing apparatus according to an embodiment of the present disclosure.

Throughout the drawings, like reference numerals will be understood to refer to like parts, components, and structures.

### Best Mode for Carrying out the Invention

-

### Mode for the Invention

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

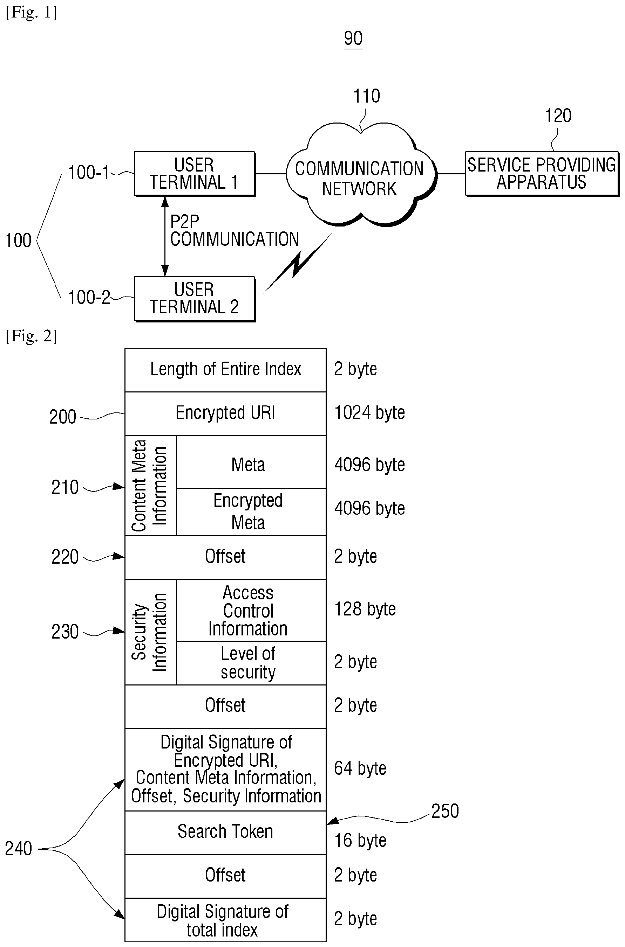

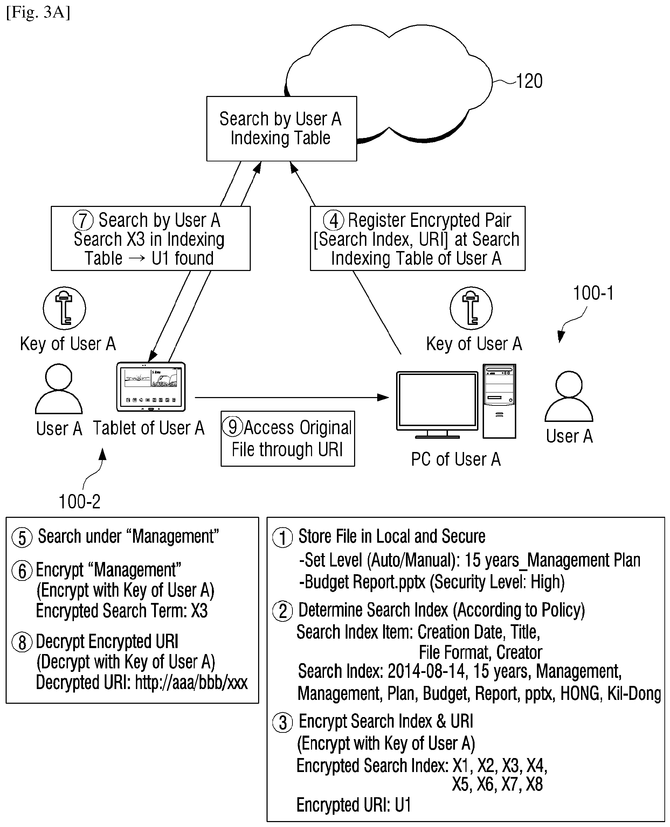

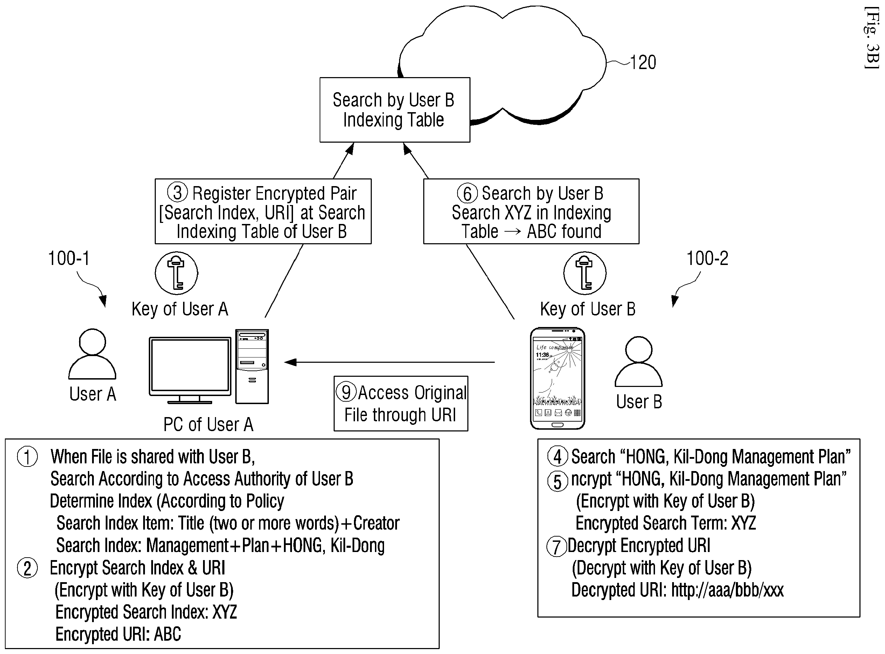

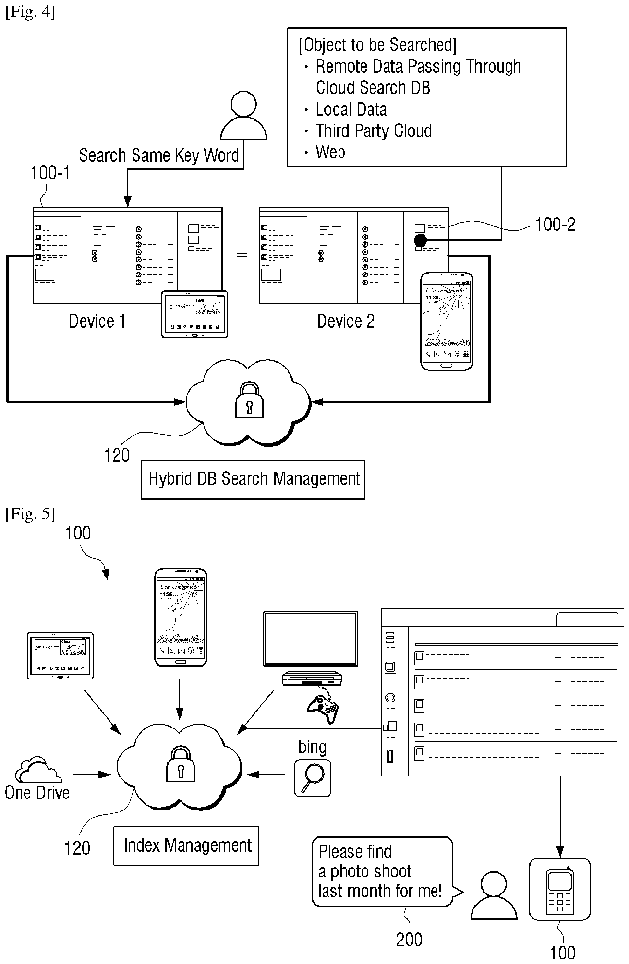

FIG. 1 is a view showing an encryption indexing-based search system according to an embodiment of the present disclosure, FIG. 2 is a view showing a data structure of indexing information according to an embodiment of the present disclosure, FIG. 3A is a view showing a search scenario between devices of a same user according to an embodiment of the present disclosure, and FIG. 3B is a view showing a scenario in which indexing information is shared and searched by changing a search term between different users according to an embodiment of the present disclosure. FIG. 4 is a view to illustrate providing the same search results to every device without synchronizing a content according to an embodiment of the present disclosure, and FIG. 5 is a view to illustrate providing standardized search results according to an embodiment of the present disclosure.

Referring to FIG. 1, the encryption indexing-based search system 90 according to an embodiment of the present disclosure includes a part or all of at least one user terminal 100, a communication network 110, and a service providing apparatus 120.

The term "including a part or all" used herein indicates that, when the user terminal 100 accesses the service providing apparatus 120 through direct communication, some elements, such as the communication network 110, may be omitted, and will be explained as including the entirety for understanding of the present disclosure.

The user terminal 100 includes a mobile device, which performs wire or wireless communication, such as a mobile phone (e.g. smartphone), a laptop, a tablet personal computer (PC), or a personal digital assistant (PDA), etc., and various devices such as a television (TV), a plasma display panel (PDP), a moving picture experts group phase 1 or phase 2 (MPEG-1 or MPEG-2) audio layer 3 (MP3) player, a desktop computer, a wearable device, etc. The user terminal 100 may further include a set-top box interworking with a TV. According to an embodiment of the present disclosure, the user terminal 100 may be any device that can search data and display data on a screen. In addition, the user terminal 100 can search data and may be connected with an external display to display data on an external screen. The data recited herein may refer to data on contents such as a document, a photo, a moving image, etc.

The user terminal 100 according to an embodiment of the present disclosure may generate encrypted indexing information corresponding to a certain content, for example, a document written by a user. In addition, the encrypted indexing information is transmitted to the service providing apparatus 120 and is generated, stored, and managed in the users' respective indexing information table. In this process, it is determined whether the encrypted indexing information has integrity. When it is determined that the encrypted indexing information has integrity, the indexing information is stored in the encrypted state.

Regarding the encrypted indexing information stored in the service providing apparatus 120, a valid subscriber who can use an encryption indexing-based search service according to an embodiment of the present disclosure may freely search the indexing information only in the registered user terminals 100, share the indexing information, search the shared indexing information and then access data based on the indexing information, or may unshare the indexing information. In addition, the subscriber may delete the indexing information according to deletion of data or change the indexing information. Furthermore, when a situation (or context) such as characteristics or location of a device, a device for providing content is in an off state, or when a new device should be registered or the device should be changed, the encrypted indexing information may be changed or used. The "sharing" recited herein means that a user A requests content X from the service providing apparatus 120 to cooperate with a user B, and the user B shares indexing information on the content X with the user A. A detailed description will be provided below.

Referring to FIG. 2, the indexing information may have a data structure as shown in FIG. 2 when the user wishes to generate indexing information regarding a certain content, for example, a document. The data structure of FIG. 2 is merely an example. The indexing information may be expressed as bit information, and may include uniform resource identifier (URI) information 200, which is address information of a stored content, meta information 210, offset information 220, security information 230, signature information 240, and token information 250. The meta information 210 includes a variety of information, for example, a title, explanation, or a creator of a document, and may be encrypted and stored. The offset information is a flag value for distinguishing a main part. The security information is information on authority to set who is allowed to read, modify, or delete a generated index. The signature information indicates an electronic signature value on indexing information just before the offset operation. The token information 250 is related to information for searching an encrypted table in the service providing apparatus 120. For example, the token information 250 may include a search key value of keyword information or authority information.

To generate the above-described information, the user terminal 100 may extract metadata, (i.e., information according to the type of content), and store the metadata. To generate the indexing information, the user may receive or store the content, and then execute a program (or an application) related to the encryption indexing-based service to select a corresponding content. The type of the content refers to a kind of a content such as a photo, a document, and a moving image, and the meta information may include different data according to the kind of the content. When the meta information is extracted, a security level of the content is determined according to a security policy. The security level may be determined variously according to the security policy. The security policy may vary from office to office or from user to user, and may vary from program designer to program designer. Therefore, the present disclosure does not limit how the security policy is set. However, for example, the security level following the security policy may be determined according to a location of a device in which the original file, (i.e., the content), is stored, a place where the original file is stored, whether a keyword includes word "confidential" or "security", user's selection, or a reporting form of a report, or an appropriate combination of them.

In addition, the user terminal 100 determines an indexing target (or object) such as a creator, a creation date, and a title according to the type of the content, and then extracts terms related to the determined indexing target, (i.e., target values). The indexing target may be referred to as a keyword according to an embodiment of the present disclosure. A combination of the keyword and a key may be referred to as a token. When the user terminal 100 requests the service providing apparatus 120 to search indexing information, the user provides information in the form of a token, and the service providing apparatus 120 may search whether token information 250 of FIG. 2 exists in the users' respective indexing information table using the token received from the user.

When the above-described process is completed, the user terminal 100 may generate indexing information by encrypting the URI information 210 of the content, and the meta information 220 and the token information 250 of the content as shown in FIG. 2, and add the signature information 240 for the sake of integrity of the encrypted indexing information or may provide the indexing information to the service providing apparatus 120 without adding the signature information 240. The signature information 240 may be substituted with a separate authentication algorithm and performed.

The user terminal 100 may include a user terminal 1 100-1 and a user terminal 2 100-2 as shown in FIG. 1. The user terminal 1 100-1 and the user terminal 2 100-2 may refer to different terminals of the same user or may refer to terminal devices of different users. For example, the user terminal 1 100-1 may search content which is stored in the user terminal 1 100-1 using the indexing information which is encrypted and stored in the service providing apparatus 120, and display the content on the screen. However, when the content that the user wishes to find is stored in another user terminal 2 100-2 of the user, the user terminal 1 100-1 may receive the content through the communication network 110 or direct communication and display the content on the screen.

Referring to FIG. 3A, the user terminal 1 100-1 stores a document file, etc. in a storage device thereof, and determines a security level (or grade) of the file (①). The user terminal 1 100-1 determines a search index according to a security policy (②). The determining of the search index may refer to extracting an index target and a target value matching the index target, and the index target may be the token information 250 of FIG. 2. The user terminal 1 100-1 encrypts the search index and URI information (③), and registers the encrypted indexing information at an indexing table of the service providing apparatus 120 (④). When this process is completed, the user terminal 2 100-2, which is another terminal of the same user, transmits a token (X3) which is generated by encrypting a search term "management" with a key of the user A to the service providing apparatus 120 (⑤, ⑥), such that the service providing apparatus 120 searches the indexing information (UI) including the token (X3) in the indexing table (see ⑦). The user terminal 2 100-2 receives the searched indexing information and decrypts the indexing information with the key of the user A (⑧), and accesses the user terminal 1 100-2 based on URI information of the decrypted indexing information and receives the original file (⑨).

In addition, when the user terminal 2 100-2, which is a terminal of a different user, stores a content, the user terminal 1 100-1 may receive the content via the communication network 110. However, if the user of the user terminal 2 100-2 does not allow the user of the user terminal 1 100-2 to share the content or limits access authority, then the user terminal 1 100-1 may not receive information on the corresponding content from the service providing apparatus 12 which manages relevant information, or may receive brief information according to access authority given thereto, and displays the information or display in the form of a thumbnail image.

FIG. 3B is a view showing operations of changing indexing information between users, sharing the changed indexing information, and searching.

Referring to FIG. 3B, when the user A of the user terminal 1 100-1 wishes to share a document file with the user B, the user terminal 1 100-1 determines a search index based on access authority of the user B (①). Herein, it is assumed that the user B has a lower security level than that of the user A. When the search index is determined, the user terminal 1 100-1 encrypts the search index along with URI information and registers the search index at the indexing information table of the user B (②, ③). The user B of the user terminal 2 100-2 receives indexing information (ABC) searched in the service providing apparatus 120 using a token (XYZ) which is generated by encrypting a search term "HONG, Kil-Dong Management Plan" with a key of the user B (④, ⑤, ⑥). In addition, the user terminal 2 100-2 accesses the user terminal 1 100-1 through URI information of the indexing information which is obtained by decrypting the received indexing information (ABC) with a key of the user B, and receives the content (⑦, ⑧, ⑨). In this example, the indexing information on the content X of the user A is generated, (i.e., copied onto the indexing information table of the user B) to share the content. However, sharing information with the user A may be added to the indexing information table of the user B, such that the indexing information on the content X of the indexing information table of the user A can be searched based on the added sharing information. The indexing information on the content X registered at the indexing information table of another user can be searched only if the user has authority. This merely depends on how a designer configures the search database (DB) of the service providing apparatus 120, and thus the present disclosure is not limited to the above-described example.

As described above with reference to FIGS. 3A and 3B, the encryption indexing-based search system 90 according to an embodiment of the present disclosure may allow the file to be shared with another user according to how the plurality of user terminals 100 are configured, and thus the user can search and share files which are not stored in the user's own device. In this process, the user authentication and device authentication may be additionally performed. Only authorized user or devices may be allowed to search. Furthermore, when data of a high security level is searched using a voice recognition program such as Samsung S-voice™, which is able to process natural language, the data may be searched using a data explaining sentence like "Please show me yesterday's prescription of the ear-nose-throat (ENT) clinic." To achieve this, the user terminal 100 may change the search data to be consistent with search term information of the search DB in view of a data structure.

The communication network 110 includes any wired or wireless communication network. The wired network includes a cable network or the internet such as a public switched telephone network (PSTN). The wireless communication network includes a code division multiple access (CDMA), wideband CDMA (WCDMA), a global system for mobile communications (GSM), evolved packet core (EPC), long term evolution (LTE), a wireless broadband (WiBro) network, etc. However, the communication network 110 is not limited to the above-mentioned networks. The communication network 110 may be used in a cloud computing network, etc. under the cloud computing environment as a connection network of a next-generation mobile communication system, which will be implemented in the future. For example, when the communication network 110 is the wired communication network, the access point in the communication network 110 may access an exchange office of a telephone company. When the communication network 110 is the wireless communication network, the communication network 110 may access a serving general packet radio service (GPRS) support node (SGSN) or gateway GPRS support node (GGSN) run by a mobile network operator and process data, or may access various repeaters such as base station transmission (BTS), NodeB, evolved NodeB (e-NodeB), etc., and process data.

The communication network 110 may include an access point. The access point includes a small base station such as a femto or pico base station which is mostly installed in a building. The femto and pico base stations are divided according to the maximum number of user terminals 100 that can be connected with the base station at one time. The access point includes a short-range communication module to perform short-range communication, such as ZigBee and Wi-Fi, with the user terminal 100. The access point may use a transmission control protocol (TCP)/Internet protocol (IP) or a real time streaming protocol (RTSP) for wireless communication. The short-range communication may be performed according to various standards such as Bluetooth, ZigBee, infrared data association (IrDA), radio frequency (RF) such as ultra high frequency (UHF) and very high frequency (VHF), and ultra wide band (UWB), etc. in addition to Wi-Fi. Accordingly, the access point may extract the location of a data packet, designate an optimum communication path for the extracted location, and transmit the data packet to the next device (e.g., the user terminal 100) through the designated communication path. The access point may share a plurality of wires in a normal network environment, and may include a router, a repeater, a relay station, etc.

The service providing apparatus 120 includes a server such as a cloud server for providing the encryption indexing-based search service. The service providing apparatus 120 may identify the integrity by verifying the validity of the encrypted indexing information provided by the user terminal 100. When the integrity is identified, the service providing apparatus 120 may generate and manage a table of indexing information encrypted for each user. For example, when the user terminal 100 requests to search a certain content in the user terminal 100, for example, when the user provides a search term or a voice query to a screen search window, the service providing apparatus 120 may receive a corresponding token (or token information), search using the received token, and provides the search results to the user terminal 100. The token may include key information which is a kind of authority information, and search term information. In this case, the search term information may be information for searching, and may also be information for finding the token information 250 included in the indexing information of FIG. 2. When it is determined that the user has authority to search through the key information, the service providing apparatus 120 may find an indexing target (for example, a company) using the search term information, extract indexing information based on a target value (for example, Samsung Electronics Co., Ltd.) based on the found indexing target, and provide the indexing information to the user terminal 100. The user terminal apparatus 100 may provide the key information to the service providing apparatus 120 to share the key information and thus search using the search term information.

In addition, the service providing apparatus 120 may perform various operations, such as sharing the indexing information requested by the user to interwork with the user terminal 100, searching a shared file and accessing the file, changing the indexing information, unsharing, and deleting the indexing information. These operations will be explained in detail below.

Referring to FIGS. 4 and 5, the encryption indexing-based search system 90 according to an embodiment of the present disclosure can provide the same search results to the user when the search is performed under the same keyword in different devices, unlike in the method according to the related art of showing different search results in different devices when search is performed under the same keyword. FIG. 4 is a view schematically showing this effect. This effect can be achieved since the service providing apparatus 120 performs standardized search in response to any kind of search made by the user as shown in FIG. 5. Furthermore, the search system 90 according to an embodiment of the present disclosure stores the content in the user terminal 100 and encrypts the indexing information, and the service providing apparatus 120 retains the indexing information, so that a probability that the content is hacked by an external hacking attack can be reduced and thus security can be more strictly protected.

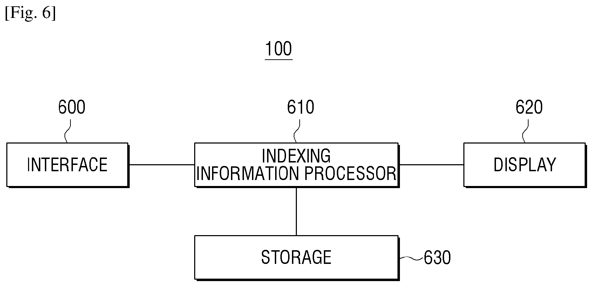

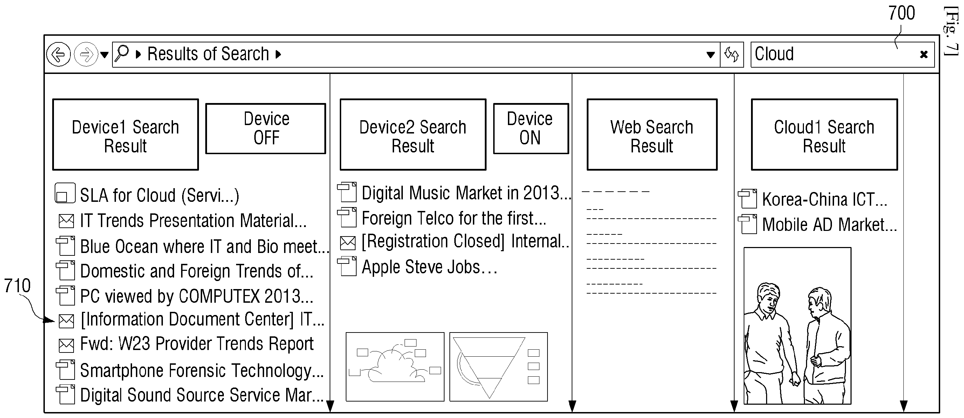

FIG. 6 is a block diagram showing the detailed configuration of the user terminal of FIG. 1, and FIG. 7 is a view showing an example of search results displayed on a display of FIG. 6.

Referring to FIG. 6, the user terminal 100 according to an embodiment of the present disclosure includes an interface 600, an indexing information processor 610, a display 620, and a storage 630.

The interface 600 includes a communication interface and a user interface. The communication interface may perform communication with the service providing apparatus 120 via the communication network 110, or may perform direct communication with a neighboring terminal. For example, the communication interface may transmit indexing information which is encrypted in the indexing information processor 610 to the service providing apparatus 120, and, in response to a user's request for a search, may receive indexing information which is encrypted according to the requested search and transmit the indexing information to the indexing information processor 610. In addition, the interface 600 may identify whether received information is information on the neighboring terminal through direct communication based on URI information extracted from the indexing information decrypted in the indexing information processor 610, and, when the received information is the information on the neighboring terminal, receive the content of the neighboring terminal and transmits the content to the indexing information processor 610 to display the content on the display 620. The user interface includes a power button to turn on or off the power. The user interface may include a voice acquirer to acquire a voice uttered by the user. The voice acquirer may interwork with the service providing apparatus 120 through an application stored in the storage 630, such as an S-voice.

The indexing information processor 610 may control the overall operation of the interface 600, the display 620, the storage 630, etc. provided in the user terminal 100. For example, the indexing information processor 610 may store indexing information received through the interface 600 in the storage 630, and then decrypt the indexing information using a decryption key stored in the storage 630. In addition, the indexing information processor 610 may extract URI information from the decrypted indexing information. The indexing information processor 610 may control the interface 600 to search a content based on the extracted URI information. Thereafter, in response to the content searched based on the URI information being received, the indexing information processor 610 may output the content to the display 620.

The indexing information processor 610 may be configured in various ways. For example, the indexing information processor 610 may be configured only in the form of hardware or software or in the form of an appropriate combination. When the indexing information processor 610 is configured only by hardware, the indexing information processor 610 may include a central processing unit (CPU) and a memory, and may store a program (or an application) for processing the indexing information in the memory and execute the program under the control of the CPU. A specific software module of the program stored in the memory may be implemented in the form of hardware. When the indexing information processor 610 is configured only by software, the indexing information processor 610 may store a program for processing indexing information therein using a mask read only memory (ROM), an erasable programmable ROM (EPROM), or an electrically erasable and programmable ROM (EEPROM), and execute the program. The indexing information processor 610 may be configured by an appropriate combination of hardware and software.

The display 620 may display various data which are processed under the control of the indexing information processor 610. For example, the display 620 may display a list of search results 710 generated using metadata of the decrypted indexing information, as shown in FIG. 7. In response to the user selecting a specific document from the list of search results 710 of FIG. 7 and requesting content on the corresponding document, the display 620 may display the content received in response to the request on the screen. The display 620 may display a content which is filtered according to a context of the user terminal 100 (i.e., a state of the user terminal 100 exposed to the outside), on the screen. For example, when the user terminal 100 is connected with an external device, a document of a high security level may be excluded from the search results. When the display 620 includes a touch panel and thus is operated in a touch screen method, the display 620 may interface with the user by means of a screen touch, and the specific document may be selected from the list of search results 710 of FIG. 7 by a touch operation.

In addition, an integrated search is performed through a search window 700 displayed on the screen of the display 620 as shown in FIG. 7, so that any content that is stored in another user terminal 100 can be searched. The same results may be displayed even when the search is performed in any user terminal 100. In addition, when the search DB of the service providing apparatus 120 is shared with a cooperating or sharing user with a limited search term to cooperate in the content search, the search can be achieved only by a search term combination including exact information through the search window 700. To find data of a content having a high security level, the search term should include exact information. For example, a desired document may be searched only when the search is performed under "15-year budget planning table created on August 14," and is not searched when the search is performed only under "budget." In addition, even when the sharing or cooperation content is not stored in the user terminal 100, the content can be searched and thus the present disclosure is not limited to the above-described example.

The storage 630 may include at least one of a volatile memory and a non-volatile memory. When the storage 630 is a volatile memory, the overall data or information processed in the indexing information processor 610 may be temporarily stored. When the data is content-related data, the information may be indexing information.

Alternatively, when the storage 630 is a non-volatile memory, a program for processing indexing information is stored in the storage 630 and then the storage 630 may provide the program in response to a request of the indexing information processor 610. For example, the storage 630 may provide the program itself in order for the indexing information processor 610 to store the program in an internal memory, or may execute the program and provide only the results of the executing.

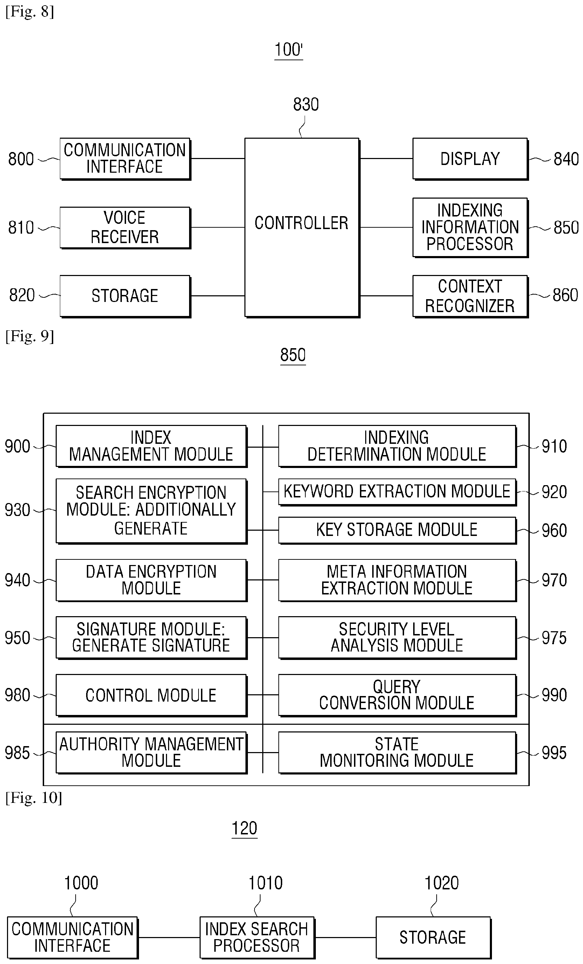

FIG. 8 is a block diagram showing another detailed configuration of the user terminal of FIG. 1, and FIG. 9 is a view showing an example of an architecture of a program stored in the indexing information processor of FIG. 8.

Referring to FIGS. 8 and 9, the user terminal 100' according to an embodiment of the present disclosure includes a communication interface 800, a voice receiver 810, a storage 820, a controller 830, a display 840, an indexing information processor 850, and a context recognizer 860.

Comparing the user terminal 100' of FIG 8 with the user terminal 100 of FIG. 6, the communication interface 800, the storage 820, and the display 840 of FIG. 8 are not greatly different from the communication interface 600, the display 620, and the storage 630 of FIG. 6, and thus the above-described explanations will substitute for explanations of the communication interface 800, the storage 820, and the display 840.

The voice receiver 810 may include a microphone. When the user utters a query for searching in the form of a word or a sentence, the voice receiver 810 may acquire the uttered voice through the microphone. In addition, the acquired query may be processed by an application stored in the storage 820, such as Samsung™ S-voice. Accordingly, the acquired query may be provided to the indexing information processor 850 and analyzed by the indexing information processor 850.

The controller 830 and the indexing information processor 850 of FIG. 8 may perform the same or similar operations as or to the operation of the indexing information processor 610 of FIG. 6. However, the indexing information processor 610 of FIG. 6 may be operated by executing a single piece of software, or may generate indexing information, encrypt generated information, and decrypt encrypted indexing information by executing software, whereas the indexing information processor 850 of FIG. 8 may be divided in a hardware level. In other words, the indexing information processor 850 may include software (SW) modules as shown in FIG. 9, or only some of the modules may include a hardware processor. Accordingly, the controller 830 may generate indexing information, encrypt generated information, and decrypt encrypted indexing information. The decrypting may include decrypting by a signature key. The indexing information processor 850 may be divided into a generator for generating indexing information, and an encryptor/decryptor. As described above, the indexing information processor 850 may be changed in various forms and thus the various embodiments of the present disclosure are not limited to the above-described explanation.

For example, FIG. 9 illustrates the form of a single integrated program, and the program may be stored in the indexing information processor 850 of FIG. 8 on an SW module (or component) basis.

Referring to FIG. 9, the indexing information processor 850 may include an index management module 900, an indexing determination module 910, a keyword extraction module 920, a search encryption module 930, a data encryption module 940, a signature module 950, a key storage module 960, a meta information extraction module 970, and a security level analysis module 975 on a module basis, and may further include a control module 980, an authority management module 985, a query conversion module 990, and a state monitoring module 995.

The index management module 900 may generate encrypted information using content, URI information, security information, and meta information. In addition, the indexing determination module 910 determines a content type from the content and transmits the determined type to the keyword extraction module 920. The keyword extraction module 920 extracts an indexing target and a target value corresponding to the indexing target from the content according to the content type, and transmits the extracted results to the search encryption module 930. The search encryption module 930 generates search term information (or token information). The data encryption module 940 may encrypt original URI information and meta information provided by the index management module 900. In this case, advanced encryption standard (AES) or other encryption algorithm. may be used as an encryption algorithm. The signature module 950 may generate an electronic signature for the encrypted original URI, meta information, and security information. The key storage module 960 may store and manage a key for encrypting and a signature. The meta information extraction module 970 may extract the meta information according to the content type, and the security level analysis module 975 may determine and store a security level with reference to the meta information of the content according to a security policy.

The control module 980 may control the overall modules. The authority management module 985 may add the user B to authority information for the user A to use the content X to allow the user B to search. The query conversion module 990 may analyze a user's semantic query and convert the result of analysis to match with the indexing information. The state monitoring module 995 may identify a connection state of an external device, and an on and off state of a device, etc. The on and off state of the device may indicate whether power is supplied from a power supply device, or whether the communication network 110 is connected with a network.

In response to a semantic query being received through the voice receiver 810 in the form of a voice, the indexing information processor 850 may analyze the semantic query and convert the result of analysis to match with the indexing information. When the semantic query is "the report written last weekend," the indexing information processor 850 converts the query to have indexing target information on a date and a title (i.e., a keyword). The information converted in this way may be encrypted and provided to the service providing apparatus 120. This operation may be performed by the query conversion module 990 of FIG. 9.

The context recognizer 860 may include a photographer such as a camera for recognizing a surrounding context. The context recognizer 860 provides an image which is obtained by photographing a surrounding context to the controller 830, and, for example, the controller 830 may analyze the image and determine the exposure state of the user terminal 100'. According to the result of determination, the controller 830 may filter the content received through the communication interface 800 and display the content on the display 840. For example, the controller 830 may skip the page including a specific phrase having a high security level, such as "meeting record" or "budget", and display the document on the screen.

According to an embodiment of the present disclosure, the user terminal 100' of FIG. 8 may be configured variously. The storage 820 may be a volatile or non-volatile memory, and the indexing information processor 850 may be a non-volatile memory. The volatile memory includes a random access memory (RAM), and the non-volatile memory may include a mask ROM, an EPROM, an EEPROM, etc. In addition, the controller 830 may include a CPU and a volatile memory. Accordingly, the controller 830 may store a program for processing indexing information of the indexing information processor 850 in the volatile memory of the controller 830, and then execute the program.

FIG. 10 is a block diagram showing a detailed configuration of a service providing apparatus.

Referring to FIG. 10, the service providing apparatus 120 according to an embodiment of the present disclosure may include a communication interface 1000, an index search processor 1010, and a storage 1020.

The communication interface 1000 may provide encrypted indexing information which is generated and provided by the user terminal 100 to the index search processor 1010. In addition, the communication interface 1000 may receive a semantic query which is encrypted and provided by the user terminal 100 (i.e., a token), and provide the semantic query to the index search processor 1010. The communication interface 1000 may transmit indexing information which is searched in the storage 1020, which is a search DB, by the corresponding token to the user terminal 100. In addition, the communication interface 1000 may perform various operations related to the operations requested by the user terminal 100, such as sharing indexing information, deleting indexing information, unsharing, etc.

The index search processor 1010 may control the overall operations of the communication interface 1000 and the storage 1020 in the service providing apparatus 120. The operation of the index search processor 1010 may be divided into an operation of registering the encrypted indexing information at the users' respective index information table of the storage 1020 by interworking with the user terminal 100, and an operation of searching indexing information registered at the information table using the semantic query provided by the user terminal 100, for example, the token, according to the user's search request.

First, to register the indexing information at the index information table, the index search processor 1010 may identify the integrity by verifying the validity of signature information in the indexing information which is encrypted and received. The integrity is related to identifying and preventing falsification of data. The validity may be verified by using a verification key of a user who transmitted the indexing information, or by acquiring a public key additionally and using the public key. For example, when the user owns only one of the two keys and opens the other key to the public, the validity of the signature information may be verified by acquiring the public key and thus by using the key owned by the user. When the integrity is identified in this way, the other indexing information is stored in the indexing table, and the security information is the information that has been already encrypted, and thus may be stored as a plain text (i.e., may be stored without being encrypted).

In response to the semantic query (i.e., the token) being received, the index search processor 1010 may perform a keyword search in the storage 1020 using the received token, and provide the search results to the communication interface 1000 to transmit the search results to the user terminal 100.

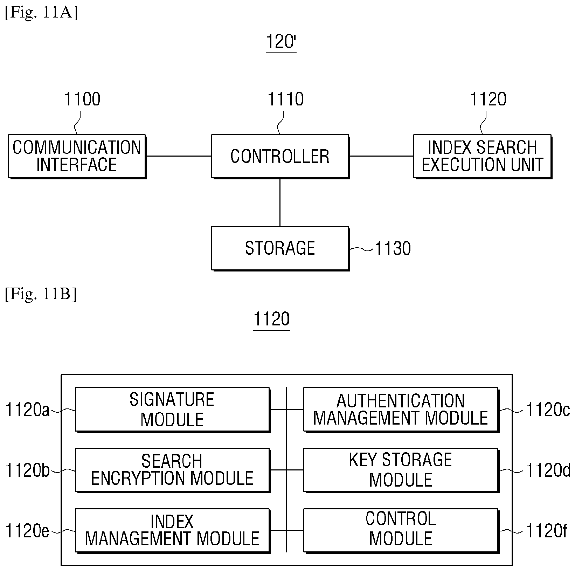

FIG. 11A is a block diagram showing a detailed configuration of a service providing apparatus according to an embodiment of the present disclosure, and FIG. 11B is a view showing an example of a configuration of a program included in an index search execution unit according to an embodiment of the present disclosure.

Referring to FIG.11A, the service providing apparatus 120' according to an embodiment of the present disclosure may include a communication interface 1100, a controller 1110, an index search execution unit 1120, and a storage 1130.

Since the communication interface 1100 and the storage 1130 of FIG. 11A are not greatly different from the communication interface 1000 and the storage 1020 of FIG. 10, the above-described explanations will substitute for explanations of the communication interface 1100 and the storage 1130.

The controller 1110 and the index search execution unit 1120 of FIG. 11A may perform the same or similar operations as or to the operations of the indexing search processor 1010 of FIG. 10. However, if the indexing search processor 1010 of FIG. 10 is operated by executing a single piece of software or operated by executing software for registering generated indexing information at the information table and searching, the index search execution unit 1120 of FIG. 11A may be divided in a hardware level. The index search execution unit 1120 may include SW modules as shown in FIG. 11B. Since some of the SW modules may be configured to include a hardware processor, the present disclosure is not limited to the above-described explanations. Accordingly, the controller 1110 may execute the index search execution unit 1120 to register the generated indexing information at the information table in the storage 1130, and search the indexing information registered at the storage 1130.

Referring to FIG. 11B, the program included in the index search execution unit 1120 of FIG. 11A may include a part or entirety of a signature module 1120a, a search encryption module 1120b, an authentication management module 1120c, a key storage module 1120d, an index management module 1120e, and a control module 1120f.

The signature module 1120a identifies the integrity by verifying the validity of signature information of the indexing information which is encrypted and received. In addition, in response to a token for searching being received, the search encryption module 1120b may search the users' respective indexing information table of the storage 1130 using the token. The search encryption module 1120b may be a search engine. The authentication management module 1120c authenticates a user and a device. The key storage module 1120d may store a key provided by the user terminal 100 and then may use the key when identifying the integrity. The index management module 1120e reflects the indexing information on the user's DB. The control module 1120f controls the overall operations of the inner modules.

According to an embodiment of the present disclosure, the service providing apparatus 120' of FIG. 11A may be configured variously. The storage 1130 may be a volatile or non-volatile memory, and the index search execution unit 1120 may be a non-volatile memory. The volatile memory includes a RAM, and the non-volatile memory may include a mask ROM, an EPROM, an EEPROM, etc. In addition, the controller 1110 may include a CPU and a volatile memory. Accordingly, the CPU may store a program stored in the index search execution unit 1120 in the volatile memory of the controller 1110, and then execute the program.

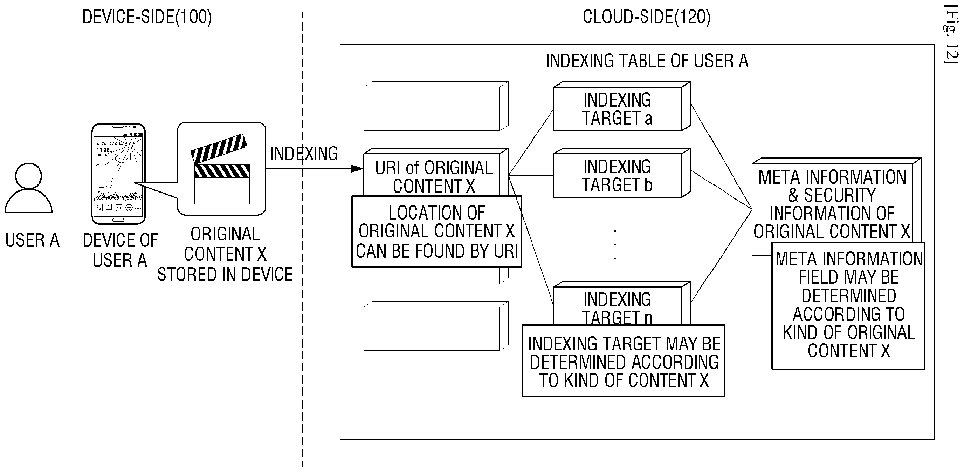

FIG. 12 is a view schematically illustrating an index (or indexing information) generation process according to an embodiment of the present disclosure.

Referring to FIG. 12 along with FIGS. 9 and 11B for the convenience of explanation, the user of the user terminal 100 according to an embodiment of the present disclosure stores a content X in the user terminal 100. The control module 980 may detect the storage of the content X. The control module 980 may instruct the meta information extraction module 970 to extract meta information from the content X. In addition, the meta information extraction module 970 may extract the meta information according to the type of the content X, and store the meta information. The control module 980 instructs the security level analysis module 975 to determine the security level of the content X. The security level analysis module 975 determines the security level with reference to the meta information of the content X according to a security policy, and stores the security level. In addition, the control module 980 instructs the index management module 900 to generate an index on the content X (i.e., indexing information). The index management module 900 determines an indexing target according to the type of the content X, and extracts a term corresponding to the indexing target (i.e., a target value) using the keyword extraction module 920. The index management module 900 configures encrypted indexing information with the extracted target values using the data encryption module 940 related to the encryption/ decryption. In addition, the control module 980 transmits the completed indexing information to the service providing apparatus 120.

The control module 1120f of the service providing apparatus 120 instructs the authentication management module 1120c of FIG. 11B to authenticate the user or authenticate the device. In addition, the server-based control module 1120f requests the index management module 1120e to reflect the indexing information on the user's search DB.

Some of the operations described up to now may be combined with other modules. For example, the authentication management module 1120c may be a part of the control module 1120f, or may be a module which is included in a platform or a web browser module. Therefore, the various embodiments of the present disclosure are not limited to the above-described module configuration.

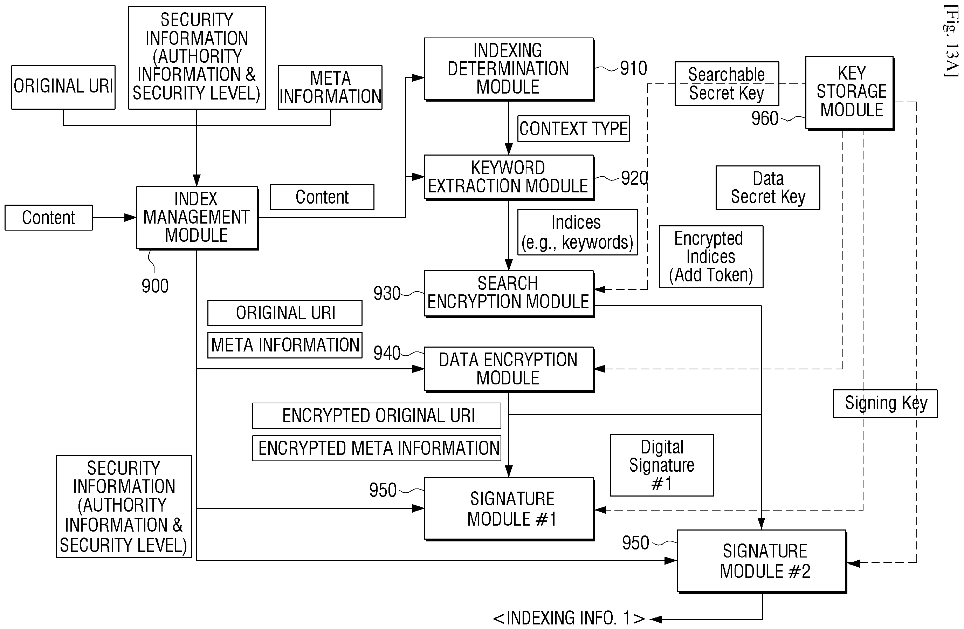

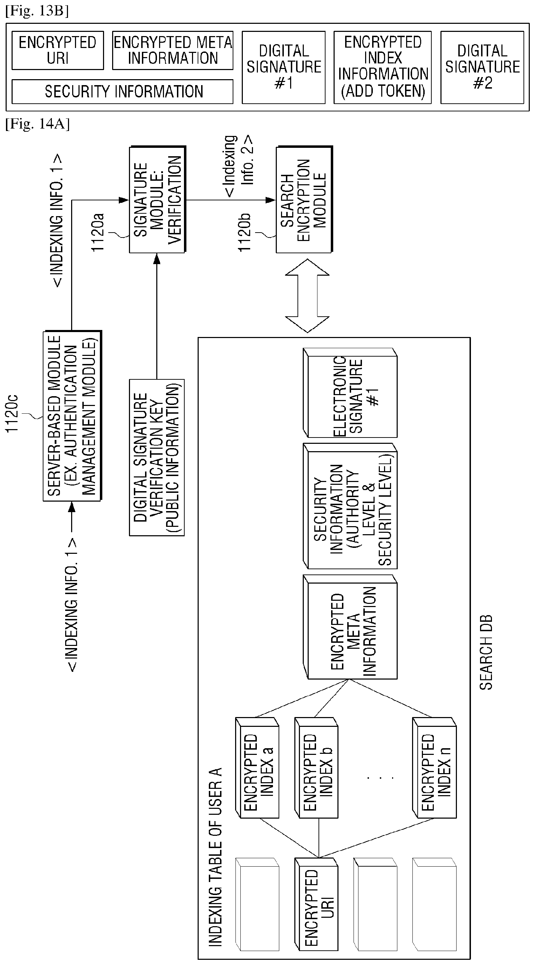

FIG. 13A is a flowchart illustrating an indexing information generation process in a user terminal according to an embodiment of the present disclosure, and FIG. 13B is a view showing a structure of first indexing information according to an embodiment of the present disclosure.

Referring to FIGS. 13A and 13B along with FIG. 9, the user terminal 100 according to an embodiment of the present disclosure receives content, URI, security information, and meta information through the index management module 900, and generates encrypted information to be stored in the search DB of the service providing apparatus 120 (i.e., indexing information 1) (Indexing Info. 1). When the content is a document created by the user, for example, the control module 980 may provide the content and URI information of a folder in which the content is stored to the index management module 900 when the document is stored in a specific space, for example, the folder, by the user. In addition, the control module 980 may provide the security information which is determined (or generated) by the security level analysis module 975, and the meta information which is extracted by the meta information extraction module 970 to the index management module 900.

The indexing determination module 910 determines a content type based on the content provided by the index management module 900, and transmits information on the determined type to the keyword extraction module 920. The content (or file) type may include a document, a photo, a moving image, etc.

The keyword extraction module 920 may extract an indexing target from the content according to the content type, and transmit the extracted result to the search encryption module 930. The indexing target may be referred to as a keyword. For example, in the case of a document, the indexing target may be a creator, a creation date, a title, etc., and, in the case of a photo, the indexing target may be a photographing date, a photographing place, etc. In the case of a moving image, the indexing target may be a recording date, a recording place, a recording time, etc.

The search encryption module 930 may add a token and output the token. In this process, the search encryption module 930 may use a key stored in the key storage module 960. The additional token includes keyword information for searching a content in the encrypted search DB of the service providing apparatus 120. A search encryption algorithm applied to the search encryption module 930 may be configured variously. For example, searchable symmetric encryption with dynamic updating may be applied.

The original URI and the meta information provided by the index management module 900 may be encrypted through the data encryption module 940. An encryption algorithm in the data encryption module 940 may use AES, etc. having an operation mode. The data encryption module 940 may use a data security key stored in the key storage module 960 to encrypt.

A first signature module may be included in the signature module 950, and may generate a first electronic signature (signature #1) on the encrypted original URI, the encrypted meta information, and the security information. The first electronic signature provides the integrity on the encrypted original URI, the encrypted meta information, and the security information, and identifies and prevents falsification of related data on the search DB. In this process, the signature module 950 may receive a signature key from the key storage module 960, and use the signature key.

A second signature module may also be included in the signature module 950, and may generate a second electronic signature (signature #2) on the encrypted URI, the encrypted meta information, the security information, the additional token, and the first electronic signature. The second electronic signature guarantees the integrity of data transmitted until related data is transmitted to the control module 1120f of the service providing apparatus 120 shown in FIG. 11B. In this process, the signature module 950 may receive a signature key from the key storage module 960, and use the signature key.

The first electronic signature and the second electronic signature according to an embodiment of the present disclosure may be configured by a same electronic signature algorithm. In this case, the same signature key and the same verification key may be used.

When an extra authentication protocol (hypertext transfer protocol (HTTP) over secure socket layer (SSL) (HTTPS)) is used when the encryption indexing-based search system 90 according to an embodiment of the present disclosure is designed, the second electronic signature may be omitted. The HTTPS encrypts session data through an SSL or transport layer security (TLS) protocol. Therefore, it can be seen that data is appropriately protected.

The key storage module 960 may store and manage keys for search encryption, data encryption, and signature (or digital signature). The key storage module 960 may include a key generation module for each algorithm when necessary. The key storage module 960 may include a key generation module for search encryption, a key generation module for data encryption, and a key generation module for signature.

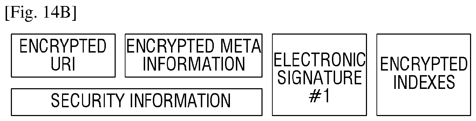

FIG. 14A is a flowchart showing, in detail, an indexing information table generation process of a service providing apparatus according to an embodiment of the present invention , and FIG. 14B is a view showing a structure of second indexing information according to an embodiment of the present disclosure.

Referring to FIGS. 14A and 14B along with FIG. 11B for the convenience of explanation, the service providing apparatus 120 of FIG. 1 may authenticate the user and the device regarding the first indexing information transmitted from the index management module 1120e through the authentication management module 1120c.

When the authentication is completed, the signature module 1120a identifies the integrity by verifying the validity of the second electronic signature in the received first indexing information. In this case, a verification key (or public key) of the transmitter is required. The public key may be openly acquired from a public key list of a public key infrastructure (PKI).

However, when an extra message authentication protocol is used by a system designer when the first indexing information is transmitted, as described above, the second digital verification may be omitted.

When the integrity of the first indexing information is identified, the signature module 1120a outputs the second indexing information having the configuration shown in FIG. 14B, and the search encryption module 1120b generates (or updates) the second indexing information in the search DB. In the example illustrated in FIG. 14A, an indexing table for the user A is generated. In this case, when the original URI, the indexing target, the meta information, etc. are stored in the search DB in the encrypted state, the security information is already in the secure state and thus may be stored in a plain text form.

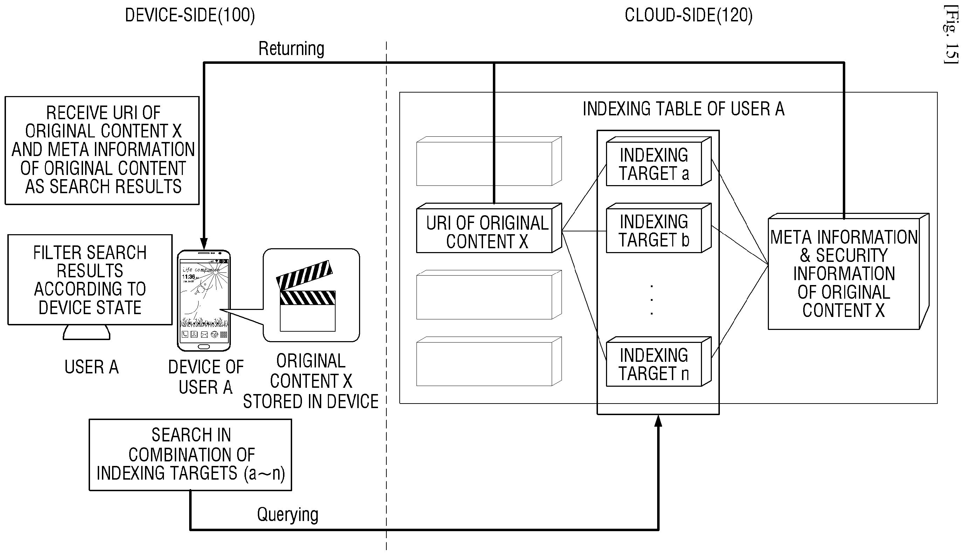

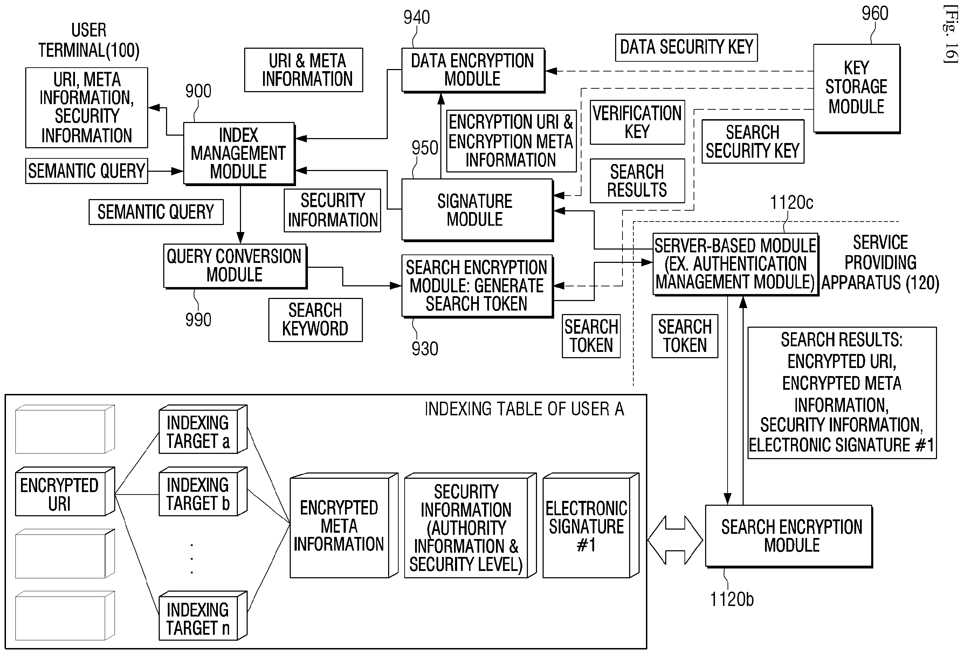

FIG. 15 is a view schematically illustrating a process of searching indexing information using a user terminal according to an embodiment of the present disclosure, and FIG. 16 is a view illustrating a process of searching data using SW modules of the user terminal and the service providing apparatus according to an embodiment of the present disclosure.

Referring to FIGS. 15 and 16, the user terminal 100 may search indexing information from the search DB of the service providing apparatus 120 to search a content stored therein or in another device.

To achieve this, the user of the user terminal 100 inputs a semantic query to search the indexing information in the search DB. The inputting the query may include not only inputting a search term through the search window shown in FIG. 7, but also inputting a voice query.

In response to the query being inputted, the user terminal 100 converts the query to match the indexing target of the indexing information through the query conversion module 990. For example, in response to a query "the report written last weekend,", the user terminal 100 may convert the query to match the indexing target (i.e., date (8/2), title (report), and abstract (report)).

In addition, the converted query may be changed to the form of a token through the search encryption module 930, and may be encrypted through the data encryption module 940 and transmitted to the service providing apparatus 120. The user terminal 100 may transmit a user identification (ID), a device ID, and the encrypted query.

The control module 1120f of the service providing apparatus 120 searches the URI, the meta information, and the security information of the content to be found using the search engine or the search encryption module 1120b, and transmits the search results to the user terminal 100. In this process, the service providing apparatus 120 authenticates the received user ID and device ID through the authentication management module 1120c, and then, when the user is determined to be valid, performs the search process and provides the search results.

In response to the encrypted indexing information being received, the user terminal 100 may determine a connection state with an external device using the state monitoring module 995 of FIG. 9.

In response to the user terminal 100 being determined to be connected with an external device, the search results are filtered and displayed on the screen. For example, when "confidential" or "budget" is identified, the result on the corresponding document may not be displayed in the list of search results 710 of FIG. 7.

The user terminal 100 may decrypt the encrypted indexing information, and receive the content based on the URI information, and may determine the connection state with an external device or an exposure state using the state monitoring module 995 of FIG. 9 and filter the search results prior to displaying the received content on the screen. Therefore, the various embodiments of the present disclosure are not limited to the above-described explanation.

In response to a semantic query received from the user through the index management module 900, the user terminal 100 according to an embodiment of the present disclosure transmits the semantic query to the query conversion module 990. The query conversion module 990 analyzes the semantic query and outputs a search keyword to the search encryption module 930. The search encryption module 930 generates a token using the search keyword. The search token enables a keyword search in the encrypted search DB, and the configuration and generation thereof may vary according to search encryption. For example, the token may be a combination of the search keyword and the key. Thereafter, the index management module 900 transmits the search token to the service providing apparatus 120 to search an index.

The authentication management module 1120c of the service providing apparatus 120 may determine whether the received search token is made by a valid user, that is, a service subscriber. When the search token is made by the valid user, the search token may be transmitted to the search encryption module 1120b. The search encryption module 1120b performs a keyword search in the encrypted search DB using the inputted search token, and provides the search results to the user terminal 100.

In response to the search results received through the index management module 900, the user terminal 100 identifies the integrity of the search results returning by the control module 1120f of the service providing apparatus 120 by verifying the validity through the signature module 950. After the integrity is verified, the user terminal 100 decrypts the URI and the security information encrypted through the data encryption module 940. In addition, the index management module 900 may provide the decrypted original URI, meta information, and security information to the user. A verification key and a decryption key used in the verifying and decrypting operations may be stored in and managed by the key storage module 960.

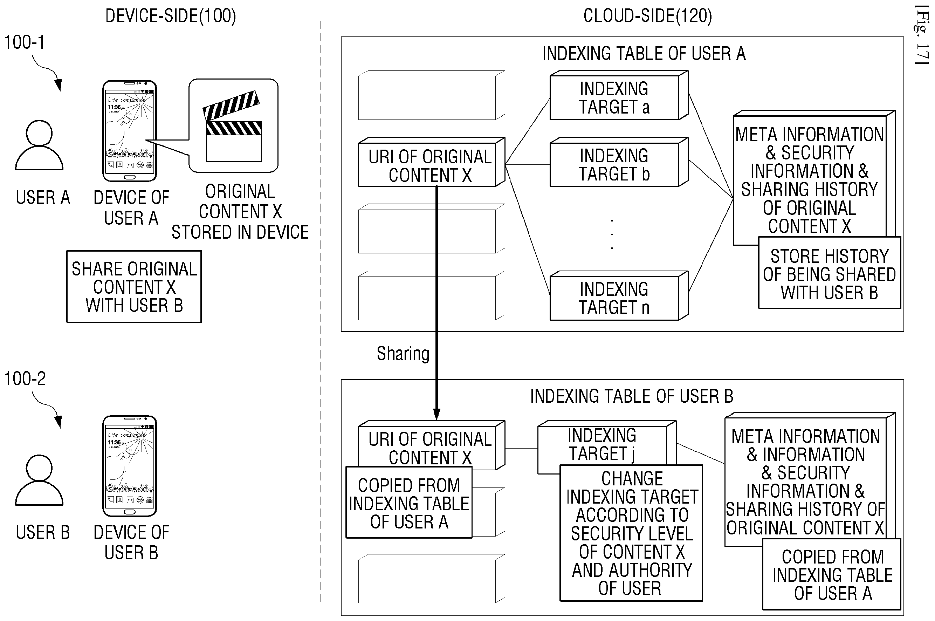

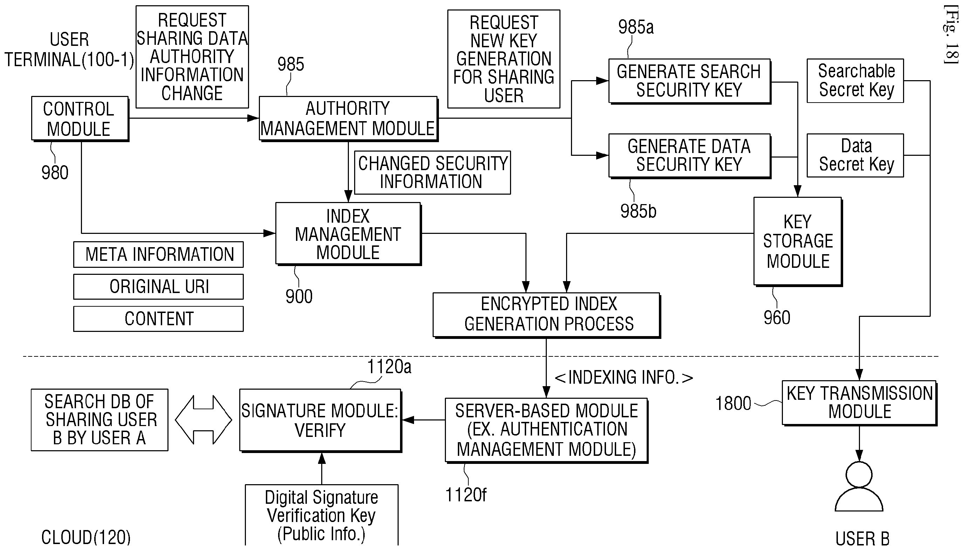

FIG. 17 is a view schematically illustrating a process of sharing indexing information between different users according to an embodiment of the present disclosure, and FIG. 18 is a view showing a process of generating a search DB for sharing according to an embodiment of the present disclosure.

Referring to FIGS. 17 and 18, the user of the user terminal 1 100-1 requests to cooperate with a user B for a content X. The requesting to cooperate refers to sharing the content X with the user B.

The control module 980 of the user terminal 1 100-1 requests the authority management module 985 to change authority information of the content X. The authority management module 985 adds the user B to the authority information of the content X, and allows sharing. In this case, the sharing may include searching, reading, and updating indexing information (or content).

In addition, the control module 980 requests the index management module 900 to modify the indexing information on the content X.

As described above, the user A may generate and manage a sharing table with the user B to share. However, the user B is able to search the indexing information but is unable to correct and delete the indexing information. Only the user A is able to correct and delete the search DB. In addition, the user B is unable to arbitrarily change an indexing target in the sharing search DB. In other words, since the content X is created by the user A, the user A has the authority.

Accordingly, as shown in the drawings, the indexing information table of the user A stores a sharing history with the user B, and the indexing information of the user A is copied or modified and registered on the indexing information table of the user B, so that the user B can access the content X of the user A.

When the user A of the user terminal 1 100-1 wishes to share information in the search DB with the user B, the control module 980 requests the authority management module 985 to modify authority information on the sharing data. The modified authority information includes allowing the user B to access the sharing content.

Accordingly, the authority management module 985 may generate a new key to be used for a sharing user, for example, a search security key and a data security key, and may store the keys in the key storage module 960 and simultaneously transmit the keys to the user B. The user B may receive the keys through the key transmission module 1800. The authority management module 985 may include a search security key generation module 985a and a data security key generation module 985b to generate the new keys. The search security key generation module 985a may generate the search security key to generate indexing information for the user B and transmit the search security key to the key storage module 960, and the data security key generation module 985b may generate the data security generation key to generate indexing information for the user B and transmit the data security generation key to the key storage module 960. The newly generated search security key and data security key may be transmitted to the user B, and, in this case, an existing channel protection method may be equally applied to the transmission method. The search security key may be used to access the indexing information for the content X of the user A, and the data security key may be used to access the content X.

The index management module 900 may receive the modified security information, meta information, original URI, and content, and generate the indexing information in the same method as the encryption index generation process.

The search security key and the data security key use keys generated for the sharing user B, and the key of the user A may be used as a signature key. In the process of generating the encrypted index, the search DB which enables the user B to search, but does not allow the user B to modify is generated.

The service providing apparatus 120 may manage and generate the encrypted index on the indexing information received by the control module 1120f from the user terminal 1 100-1. When the validity is verified after the integrity is identified through the signature module 1120a, the service providing apparatus 120 generates the search DB of the sharing user B by the user A.

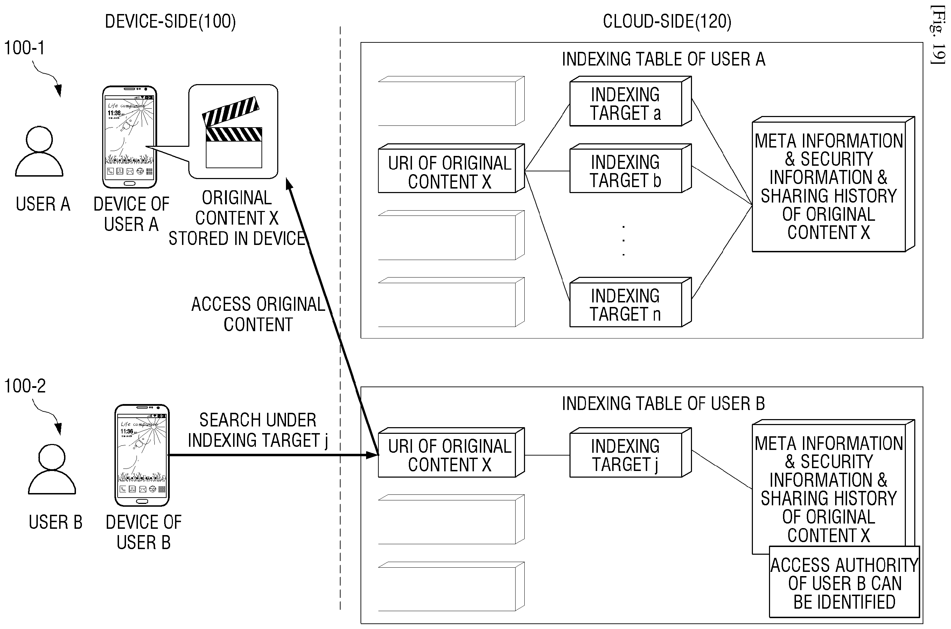

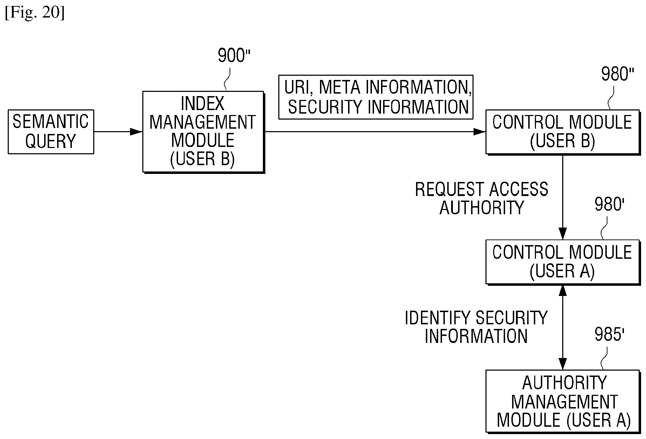

FIG. 19 is a view schematically illustrating a process of accessing after searching a shared file according to an embodiment of the present disclosure, and FIG. 20 is a view showing a process of searching and accessing a file by a sharer using SW modules in detail according to an embodiment of the present disclosure.

Referring to FIGS. 19 and 20, the user B who has permission to share a file through the process described above with reference to FIGS. 17 and 18 receives the indexing information on the content X of the user A from the user B's own indexing table through a keyword search. In this case, the access authority of the user B is identified from the sharing history on the indexing information table, so that the user B can receive the searched indexing information. After the received indexing information is decrypted, the user B accesses the content X of the user A based on the URI information in the decrypted indexing information.

The index management module 900" of the user terminal 2 100-2 receives indexing information as a result of searching under a semantic query. The index management module 900" may transmit the received indexing information to the control module 980" of the user terminal 2 100-2.

The control module 980" of the user terminal 2 100-2 may access the user terminal 1 100-1 based on the URI information on the content X, and request an access to the sharing content X from the control module 980' of the user terminal 1 100-1. In this process, the control module 980' may request a data security key. When the control module 980' of the user terminal 1 100-1 determines that the user B has the authority to access as a result of identifying the security information of the user B through the authority management module 985', the user terminal 1 100-1 may share the content X with the user B.

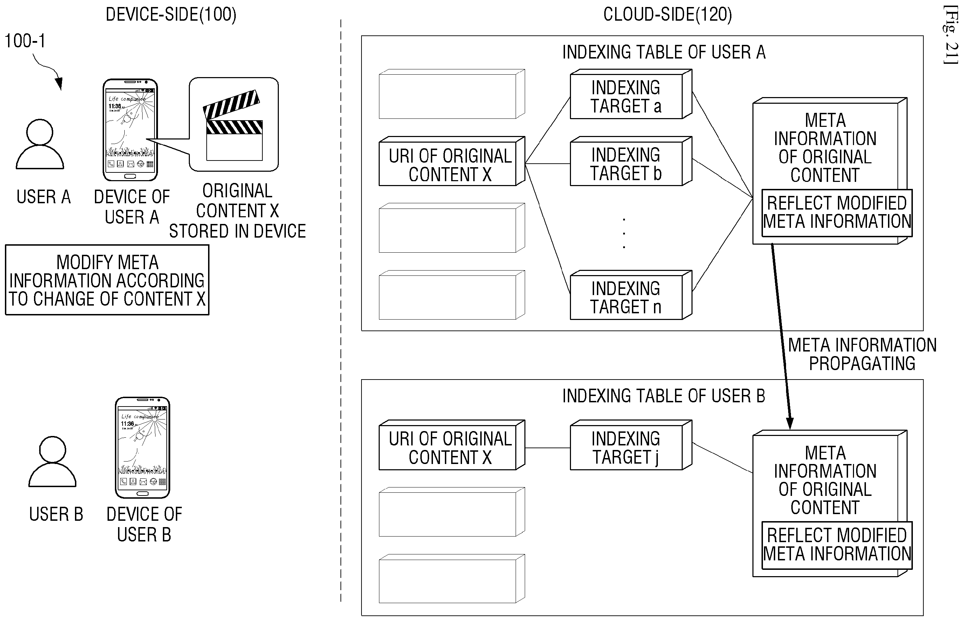

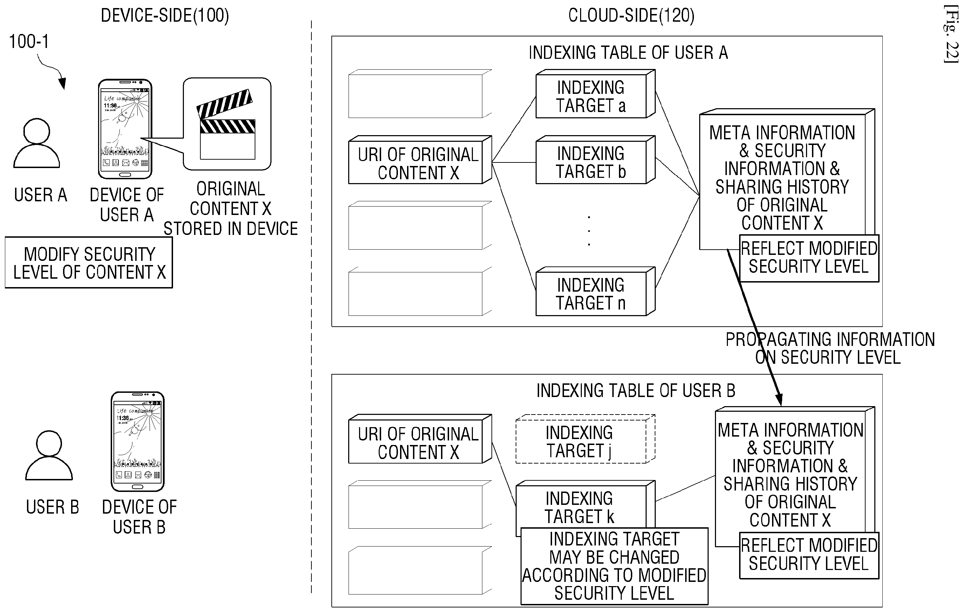

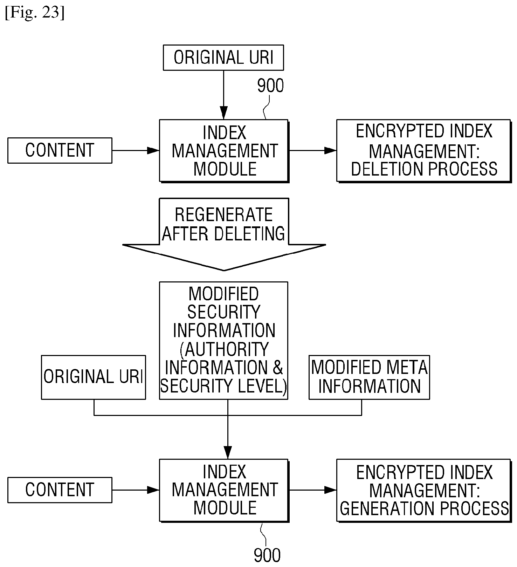

FIG. 21 is a view schematically illustrating a process of modifying meta information according to an embodiment of the present disclosure, FIG. 22 is a view schematically illustrating a security level modifying process according to an embodiment of the present disclosure, and FIG. 23 is a view showing a process of modifying a security level and meta information of a sharer using SW modules in detail according to an embodiment of the present disclosure.

Referring to FIGS. 21-23, when the user A changes the content X stored in the user terminal 1 100-1, newly generated indexing information is provided to the service providing apparatus 120 and the search DB is updated according to a change request.

When the user A has a sharing history with the user B as a result of identifying the sharing history, the user terminal 1 100-1 may request to modify corresponding meta information in the indexing information of the content X stored in the indexing information table of the user B, and thus modify the corresponding information.

In addition, referring to FIG. 22, when the user A changes the security level of the content X, the user terminal 1 100-1 may generate indexing information regarding the content X and transmit the indexing information to the service providing apparatus 120, such that the indexing information on the content X of the user A stored in the search DB is updated.

When the user A has the sharing history with the user B, the indexing information on the content X on the indexing information table of the user B may be modified.

Referring to FIG. 23, as a simple method to modify the security information and the meta information through the index management module 900, the user terminal 1 100-1 deletes the existing indexing information on the content X through an encrypted index management and deletion process. After deleting the indexing information, the user terminal 1 100-1 may perform an update process by newly registering the modified security information and meta information at the indexing information table through an encrypted management and generation process.

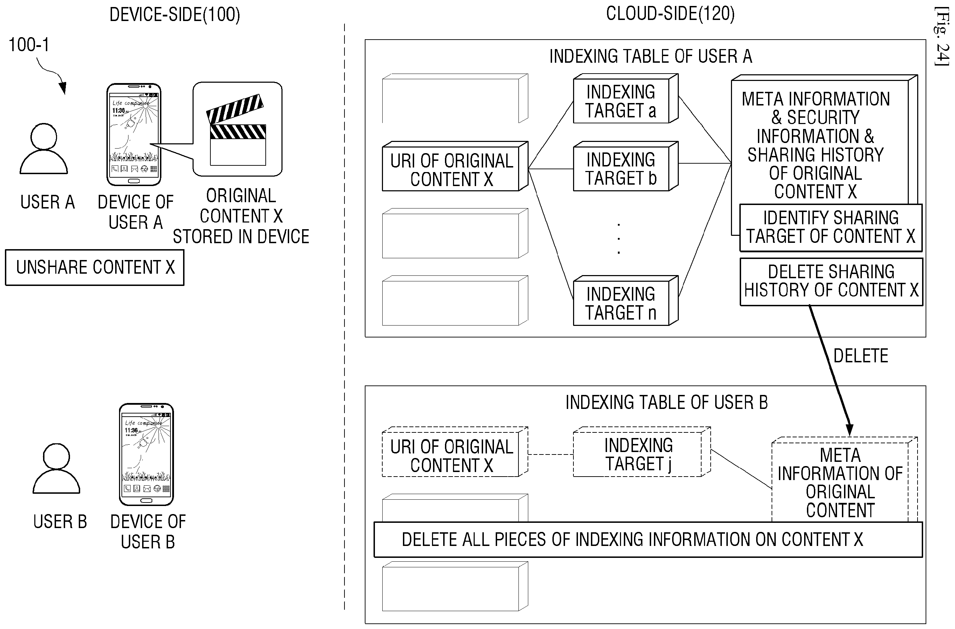

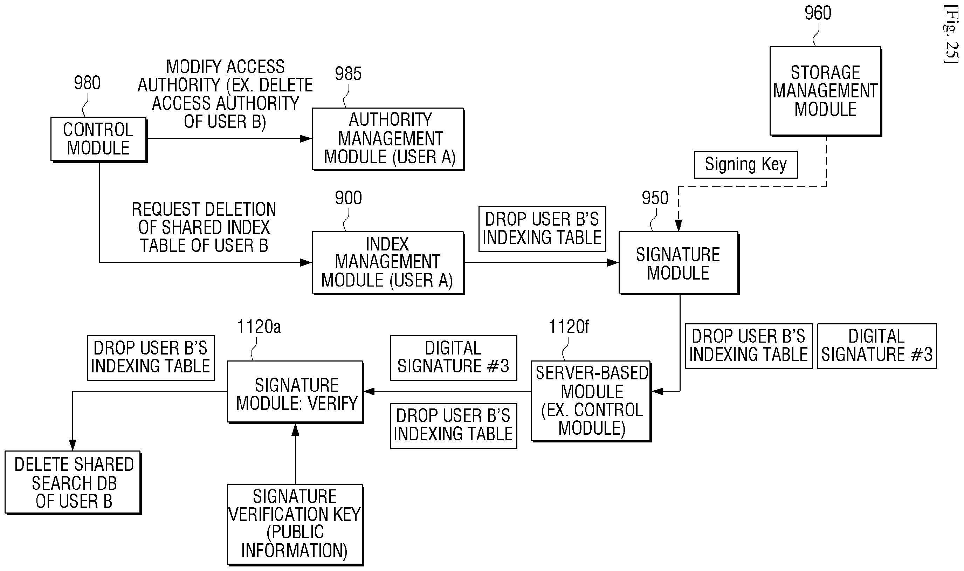

FIG. 24 is a view schematically illustrating an unsharing process according to an embodiment of the present disclosure, and FIG. 25 is a view showing a process of deleting information in a sharing search DB using SW modules according to an embodiment of the present disclosure.

Referring to FIGS. 24 and 25, the sharing indexing information on the content X in the sharing search DB of the user A and the user B may be deleted by the user A which owns the original content.

The control module 980 of the user terminal 1 100-1 modifies access authority through the authority management module 985. The control module 985 requests the service providing apparatus 120 to delete the sharing search DB through the index management module 900.

The index management module 900 may guarantee the integrity through an electronic signature in order to prevent falsification of the delete request. The signature has been described above and thus a redundant explanation thereof is omitted. To verify the integrity of the delete request by the electronic signature, an extra message authentication mechanism may be applied when the system is designed.

Finally, the control module 1120f of the service providing apparatus 120 may delete the sharing indexing information on the content X for the user B from the search DB. When a signature is added in this process, the service providing apparatus 120 may identify the integrity through the signature module 1120a.

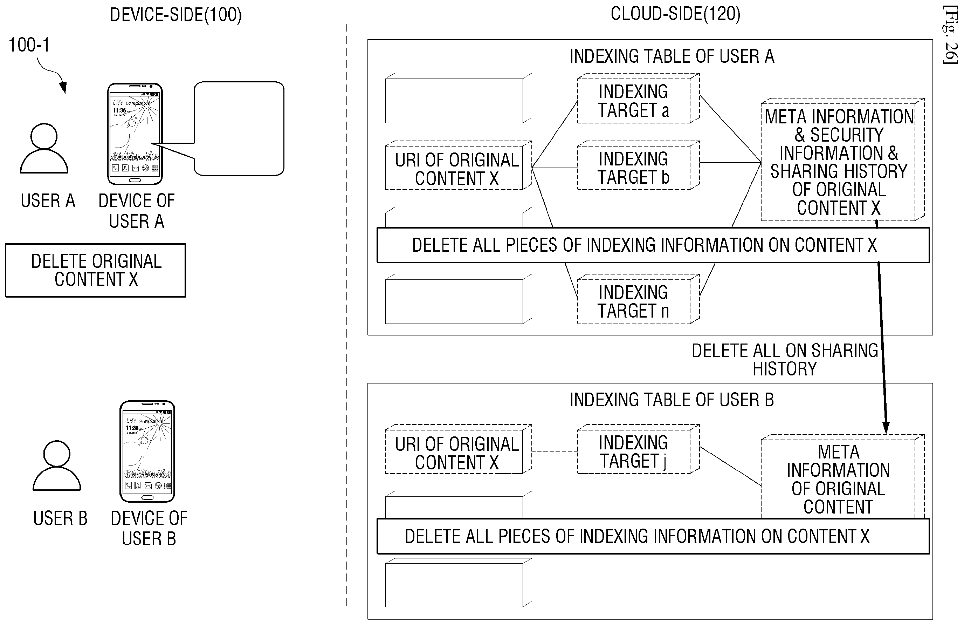

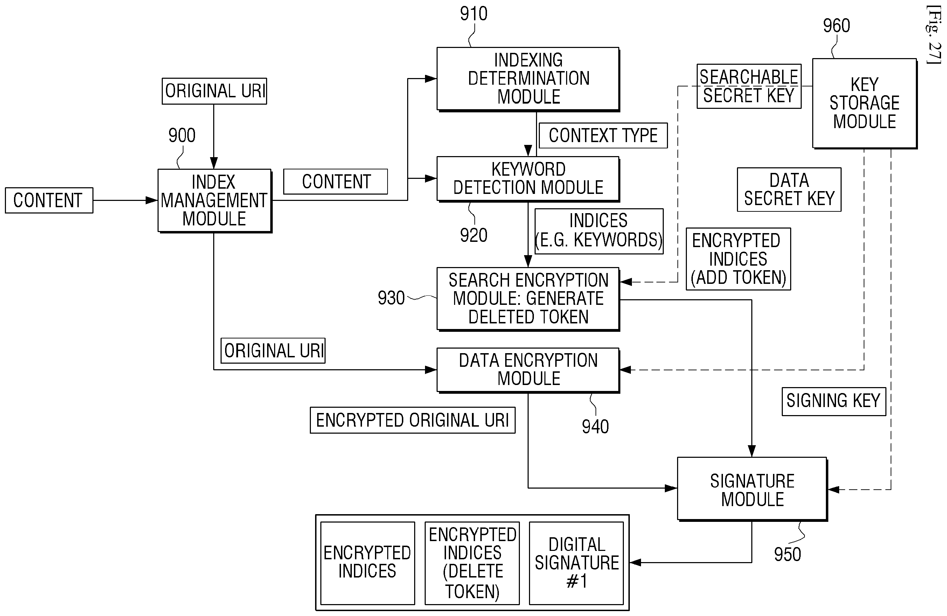

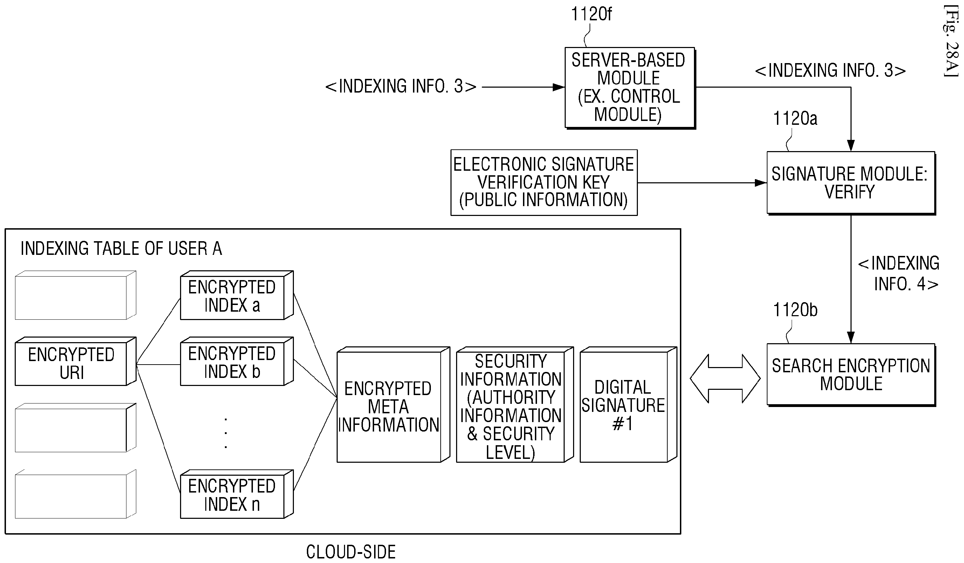

FIG. 26 is a view schematically illustrating a process of deleting original data according to an embodiment of the present disclosure, FIG. 27 is a view showing a process of deleting indexing information according to deleted data of the user terminal according to an embodiment of the present disclosure, and FIGS. 28A to 28C are views showing a process of deleting indexing information according to deleted data of a service providing apparatus according to various embodiments of the present disclosure.

Referring to FIGS. 26, 27, and 28A-28C, when the user A of the user terminal 1 100-1 deletes the content X, the index management module 900 receives the deleted content and corresponding URI information, and generates indexing information (Indexing Info. 1).

The indexing determination module 910 determines a content type from the content, and transmits the determined type to the keyword extraction module 920.

The keyword extraction module 920 extracts an indexing target from the content according to the content type, and transmits the extracted result to the search encryption module 930.

The search encryption module 930 may generate a delete token and output the delete token. The delete token may be used to delete the indexing information related to the content in the encrypted search DB. The delete token may be configured differently according to an applied search encryption algorithm, and searchable symmetric encryption with dynamic updating may be applied. The delete token may be configured by a combination of the indexing target and an authority key.

The original URI provided through the index management module 900 is encrypted through the data encryption module 940. AES, etc. may be used as an encryption algorithm in the data encryption module 940.

The signature module 950 generates an electronic signature for the encrypted URI and the delete token. The electronic signature guarantees the integrity of data which is transmitted until the relevant data is transmitted to the control module 1120f of the service providing apparatus 120 of FIG. 11B. This case may be substituted with an authentication protocol as described above.

The key storage module 960 may store and manage a key for search encryption, data encryption, and electronic signature.

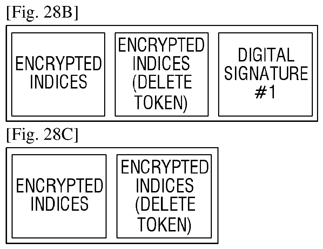

The indexing information generated to delete the content X by the process shown in FIG. 27 is transmitted to the service providing apparatus 120, and corresponding indexing information is deleted from the search DB by the detailed process shown in FIG. 28A. In this case, the transmitted indexing information may have a format of FIG. 28B.

The indexing information of FIG. 28B, which is transmitted from the user terminal 1 100-1 to the control module 1120f (or the index management module 1120e) of the service providing apparatus 120, identifies the integrity by verifying the validity of the electronic signature. This operation is performed by the signature module 1120a, and the verification key (or public key) of the transmitter may be openly acquired through the list of public keys of the PKI. As described above, when a message authentication protocol is used, the validity verification may be omitted.

When the integrity is identified, the search encryption module 1120b updates the search DB with indexing information of a format shown in FIG. 28C using the delete token. The updating refers to deleting a content stored in a specific URI address rather than deleting all of the content. Only the content matching the corresponding URI address is deleted and thus the deleting may be interpreted as updating.

In FIGS. 26 to 28B, the content is deleted based on a specific address. However, the content may be selected and deleted on the basis of a file (i.e., a content file, a folder, or a device). In this case, the process of deleting the content is not greatly different from the process of deleting the content based on the address, and thus a detailed description thereof is omitted.

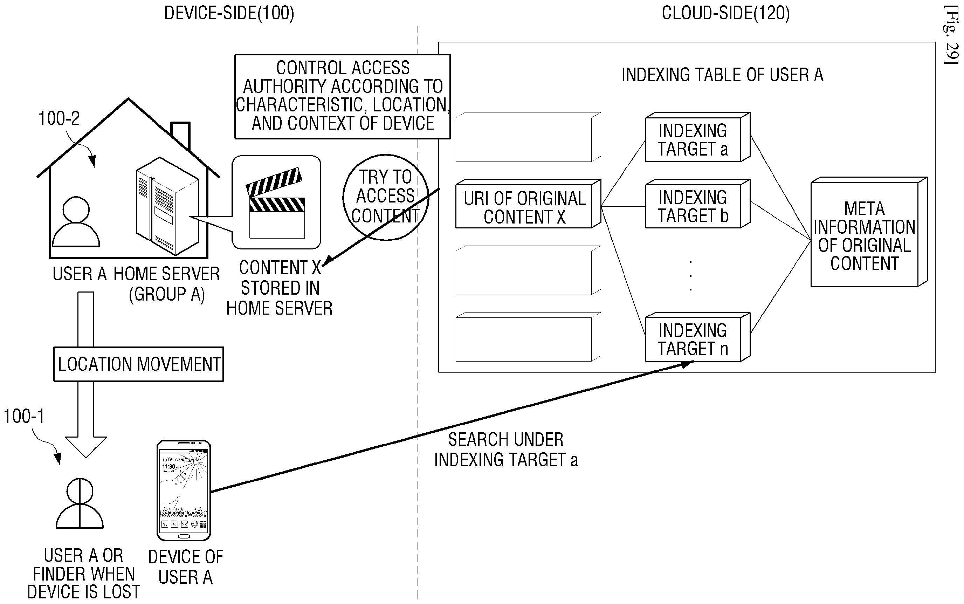

FIG. 29 is a view showing a content accessing scenario considering a characteristic and a location context of a device according to an embodiment of the present disclosure.

Referring to FIG. 29, it is assumed that the user terminal 1 100-1 is a mobile device such as a smartphone, and the user terminal 2 100-2 is a fixed device such as a desktop computer, and the mobile device wishes to access a content of the fixed device. When the user terminal 1 100-1 and the user terminal 2 100-2 are in the same space, global access authority may be given, and, when the user terminal 1 100-1 and the user terminal 2 100-2 are at a long distance, different access authority may be applied.

For example, when the user terminal 1 100-1 searches indexing information in the search DB, a different access authority may be applied according to a characteristic, a location, and a context of the device. The characteristic of the device indicates whether the device is a fixed device or a mobile device, and the location indicates whether the device is located in a house, school, office, or public place.

For example, when the user terminal 1 100-1 receives indexing information on content of the user terminal 2 100-2, the user terminal 1 100-1 may determine whether the user terminal 1 100-1 and the user terminal 2 100-2 are located in the same space through peer-to-peer (P2P) communication, for example, short-range communication such as Bluetooth and Wi-Fi, and show all of the search results. In addition, when the user terminal 1 100-1 is located in a public place, the user terminal 1 100-1 may limit some of the search results.

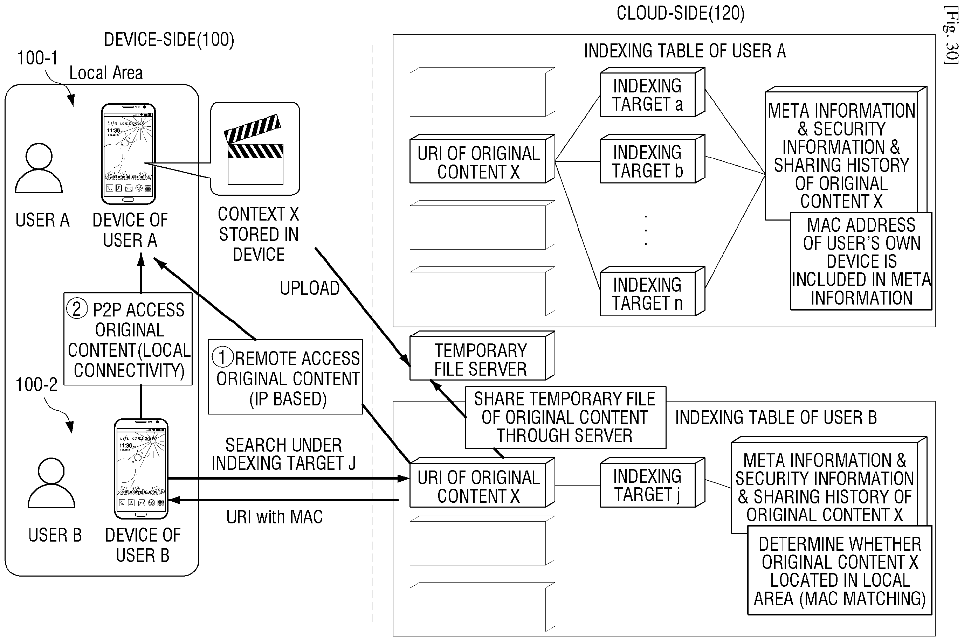

FIG. 30 is a view to illustrate a content processing process when a terminal requesting content and a terminal providing content exist in a short-distance area according to an embodiment of the present disclosure.

Referring to FIG. 30, the operations related to FIG. 30 has been described with reference to FIG. 29. However, the user terminal 2 100-2 of the user B receives indexing information including URI information having a media access control (MAC) address from the search DB in order to search content of the user terminal 1 100-1. When the user terminal 2 100-2 is connected with the user terminal 1 100-1 through P2P communication based on the MAC information, the user terminal 2 100-2 may directly receive the content from the user terminal 1 100-1 through P2P communication.

When the user terminal 2 100-2 is located within a radius where a remote control is possible, in addition to through P2P, the user terminal 2 100-2 may directly receive the content. Also, any method by timing synchronization function (TSF) may be applied. The TSF refers to a communication method which uses a periodic beacon frame. For example, since a channel is opened due to the period beacon frame, it may be easy to receive the content.

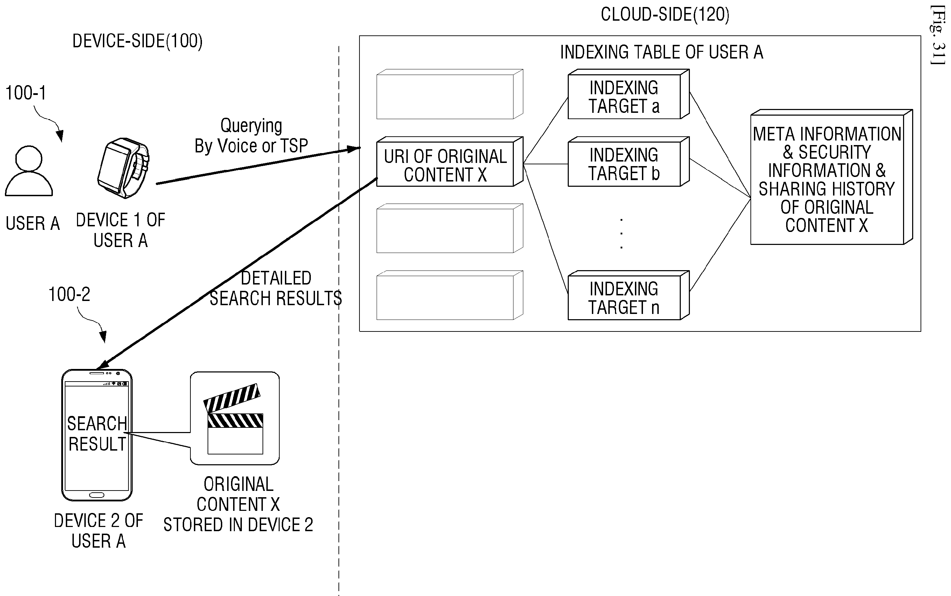

FIG. 31 is a view showing a search device and a result device which can be separated from each other according to an embodiment of the present disclosure.

Referring to FIG. 31, the user A searches content stored in a specific external device through the user A's own wearable device as the user terminal 1 100-1, but receives and sees the search results through the user A's own user terminal 2 100-2.

Various examples of this case may be provided. For example, since the user terminal 1 100-1 such as a wearable device is designated according to a service registered by the user, the user terminal 1 100-1 may provide a voice query to use the service. However, since the content X is stored in the user terminal 2 100-2, the search results may be provided to a device which is registered at the search DB. This may be because the search results are set to be shown based on the user terminal 2 100-2 in which the content is stored.

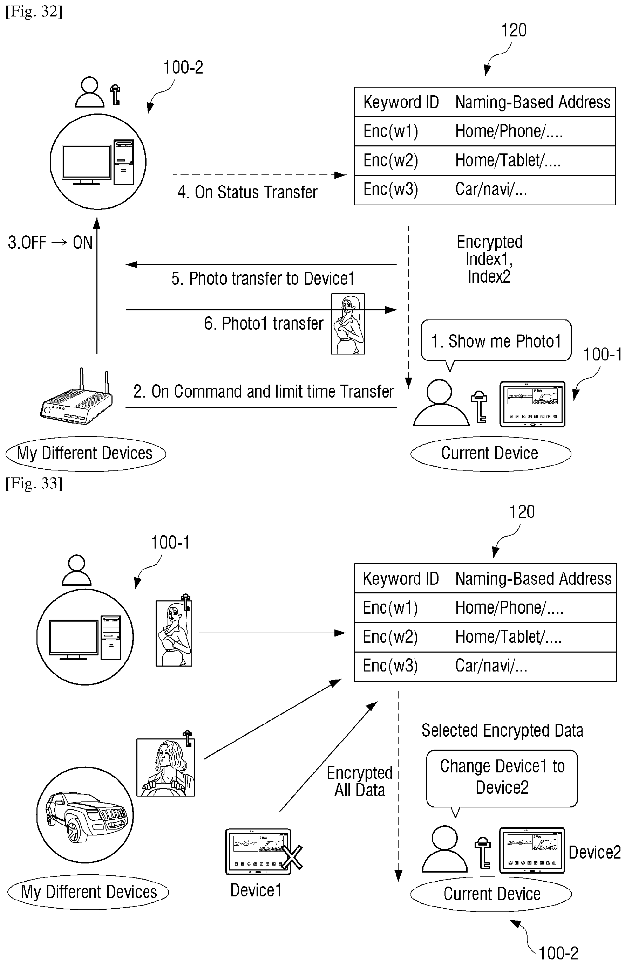

FIG. 32 is a view showing a scenario for using a content when a device which is a content source is turned off according to an embodiment of the present disclosure.

Referring to FIG. 32, the user terminal 1 100-1 requests a photo from the user terminal 2 100-2 which is turned off. This case occurs when content stored in a disabled device is viewed in detail or downloaded, as a result of searching.

When the user wishes to view original content, the current device of the user transmits a command to a second external device connected with the turned-off device, such as an access point. The external device transmits an on command (or a limited time) and an index to the turned-off first external device. When the first external device is turned on, a file related to an index is directly transmitted to a user cloud or a user device, and, when the job finishes, the first external device is turned off again or is turned off after a limited time. When the first external device is programmed to be turned on, the data is automatically transmitted after the device is turned on or a notification may be additionally required.

For example, the user terminal 1 100-1 tries to access the user terminal 2 100-2 based on URI information of indexing information received from the service providing apparatus 120, but may be notified that the corresponding device is turned off.

In this case, the user terminal 1 100-1 may request the user terminal 2 100-2 to be turned on. This operation may be performed through a neighboring access point.

Accordingly, the user terminal 1 100-1 may receive a photo from the turned on user terminal 2 100-2.

Even when the user terminal 2 100-2 is turned off, a communication module or other components are maintained in an active state. Therefore, it is possible to turn on the turned off device according to an on request from an external device.

FIG. 33 is a view showing a scenario in which a device is changed or lost according to an embodiment of the present disclosure.

Referring to FIG. 33, when a specific device of the user terminal 1 100-1, for example, a tablet PC, is changed to a new tablet PC, or the corresponding tablet PC is lost, the user may request to change or delete the encrypted indexing information on the changed or lost user terminal 1 100-1 through another user terminal 2 100-2.

For example, when the user terminal 2 100-2 requests change or deletion in the user terminal 1 100-1, the user terminal 2 100-2 may display a list of a plurality of user terminal devices 1 100-1 registered by the user on the screen. In response to the user selecting the changed or lost user terminal 1 100-2 from the list displayed on the screen, device ID information of the user terminal 1 100-1 may be encrypted and provided to the service providing apparatus 120. A signature for verifying the integrity may be added to the encrypted device ID information and transmitted, or an extra authentication protocol may be used.

The service providing apparatus 120 may change or delete indexing information on all of the content having the corresponding device ID (i.e., encrypted indexing information) in the search DB based on the encrypted device ID information received from the user terminal 2 100-2.

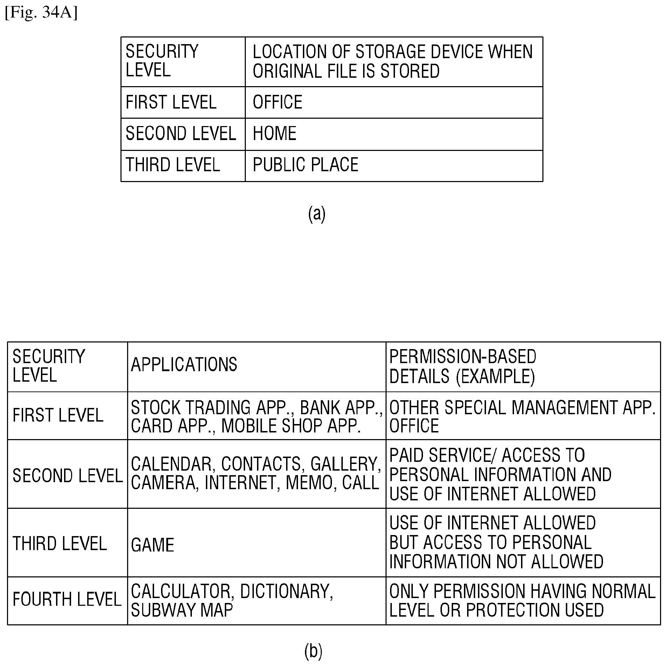

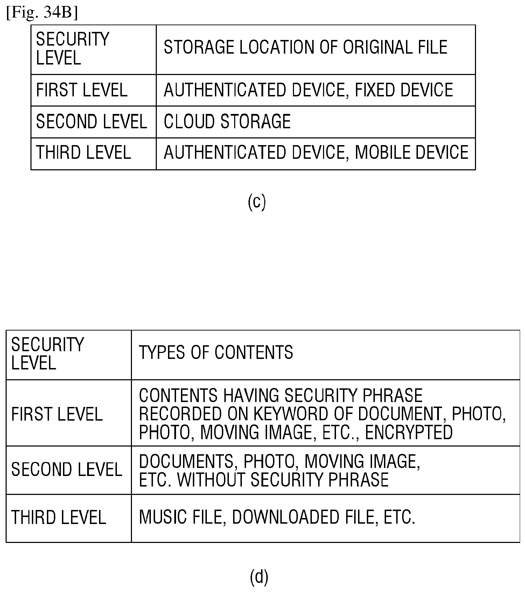

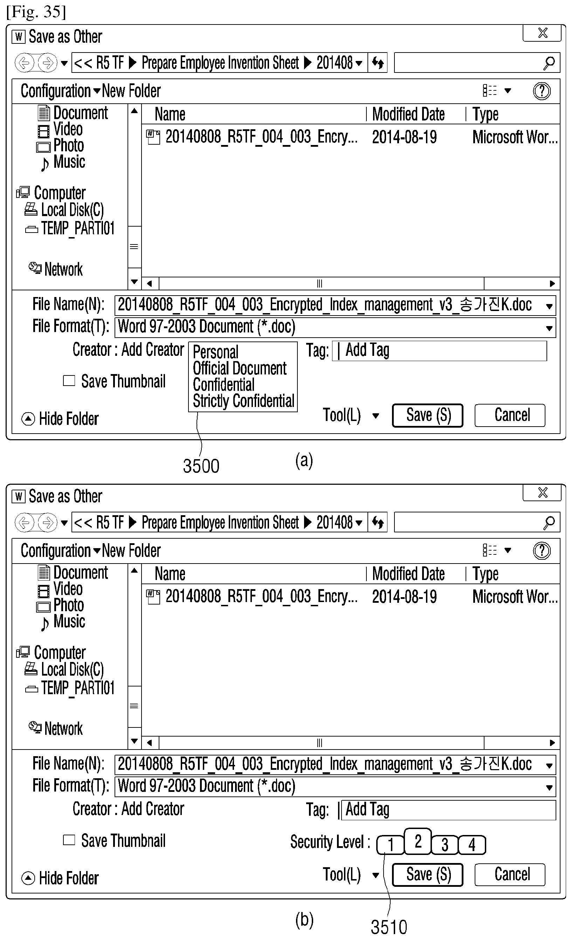

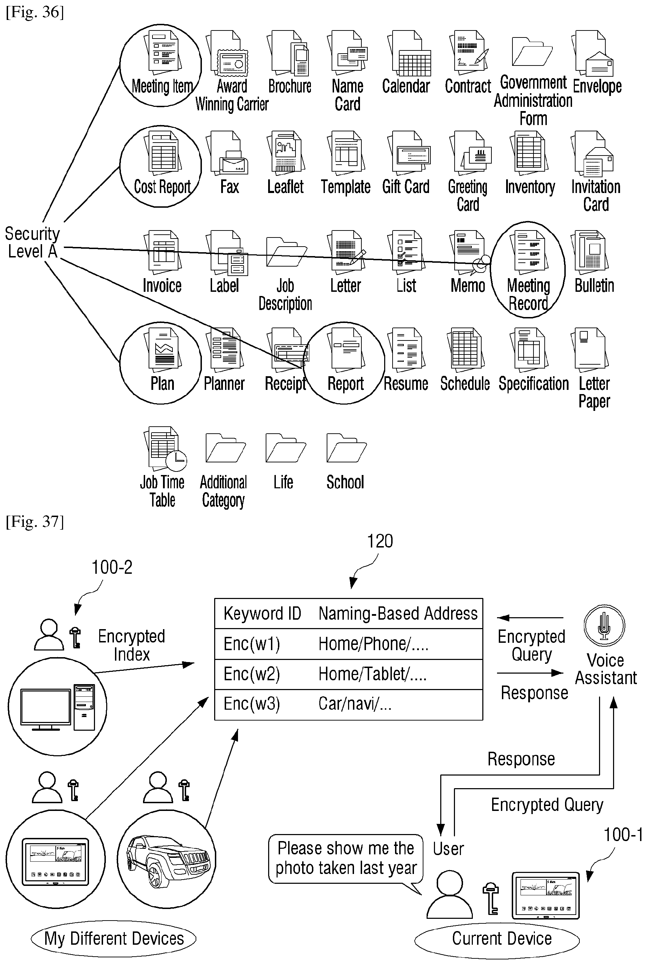

FIGS. 34A and 34B are views showing a security level generation scenario according to various embodiments of the present disclosure, FIG. 35 is a view showing a recommendation screen of a security level according to an embodiment of the present disclosure, and FIG. 36 is a view to illustrate a security level which is determined according to a report form according to an embodiment of the present disclosure.

Referring to FIGS. 34A, 34B, 35, and 36, along with FIG. 9 for convenience of explanation, the security level analysis module 975 of the user terminal 100 determines a security level according to a security policy with reference to meta information following a type of content. The meta information may include a variety of information shown in FIGS. 34A and 34B. For example, a variety of information such as information on a location of a storage device in which an original file is stored, and a storage location of the original file may be included in the meta information. In this case, the security policy is related to determining the security level of which level when specific information are included in the meta information. For example, when the meta information indicates that the location of the storage device is an office, the security level is determined as a first level, and, when the meta information indicates that the location of the storage device is a public place, the security level is determined as a third level. In addition, when the meta information includes information "confidential" or "security", the security level is determined as a top level.

The user terminal 100 understands the location of the device being in use by the user and determines whether the device is located in an office or home, and then determines the security level of a file created in the office and a file created at home as shown in view (a) of FIG. 34A, or understands applications of the device being in use and determines the security level of the file according to an application grade as shown in view (b) of FIG. 34A. In addition, the user terminal 100 may determine the security level according to a place in which the original file is stored as shown in view (c) of FIG. 34B. For example, when the device is authenticated, but is a fixed device, the security level is determined as the first level, and when the device is a mobile device, the security level is determined as the third level. In addition, the security level may be determined according to keywords extracted to search the index, such as "confidential" and "security" as shown in view (d) of FIG. 34B.

In addition, the security level may be determined according to user's selection as shown in view (a) of FIG. 35, or may be determined through user recommendation of a security level based on random decision of a security level. For example, when the security level is recommended, a process of determining and selecting the security level may be added.

The user may determine the security level by selecting the security level through a security level select item 3500 as shown in view (a) of FIG. 35, and the user terminal may recommend the security level of content data for the user through security level auto decision through a recommend item 3510. For example, "TD project final report form" may be determined a "low" level by user's selection or auto decision, but "15-year-management plan-budget report" may be determined as a "high" level by user's selection or auto decision.

In addition, the security level may be determined according to the report form as shown in FIG. 36. When the report form is a form such as a report or meeting item, the security level may be determined as the highest level. This can be known by analyzing the contents of a cover and through the title. In addition, the security level may be determined by analyzing the document, such as a document structure, a template, a form file, etc., and the security level may be determined in various ways, for example, may be determined with reference to the security levels of the contents stored in a storage folder.

All of the relevant data may serve as meta information, but, even when the data is not generated as meta information, the security level may be directly determined when it is determined according to the security policy. Therefore, the various embodiments of the present disclosure are not limited to the method of determining the security level using the meta information.

FIG. 37 is a view showing a scenario showing a process of searching encrypted indexing information through voice recognition according to an embodiment of the present disclosure.

Referring to FIG. 37, encrypted index information regarding materials stored in respective terminals is synchronized with a cloud (i.e., the service providing apparatus 120) so that it can be known where the materials are located anywhere and at any time, regardless of whether each terminal is turned on/off, without worrying about security.

In addition, the user terminal 1 100-1 converts a received voice query to correspond to search tem information of the search DB, encrypts the converted voice query, and uses the encrypted voice query, and thus can receive contents stored in various kinds of user terminals 2 100-2. The encrypted voice query may be a token.

For example, when the user generates a voice query saying "please show me the photo taken last year" as shown in FIG. 37, the user terminal may receive indexing information as a result of searching under the voice query from the service providing apparatus 120, and may be provided with a desired content by selecting the content from a list of search results generated using meta information of the decrypted indexing information.

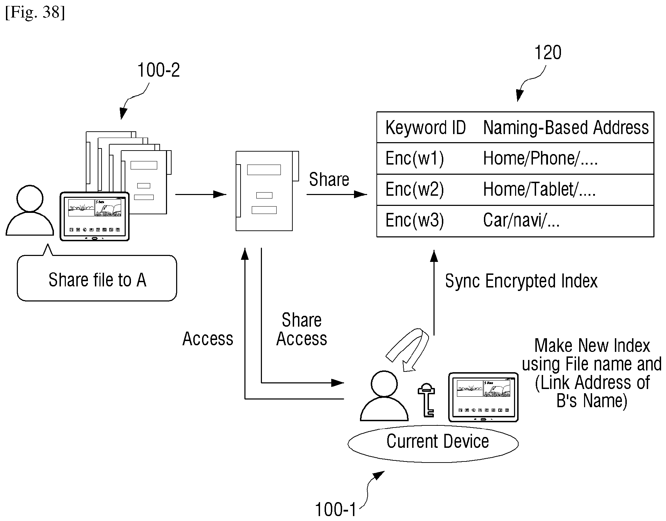

FIG. 38 is a view showing a scenario showing a process of generating new indexing information on a shared file according to an embodiment of the present disclosure.

FIG. 38 shows a process of generating indexing information on materials shared by another user using information such as a file name, a link address, or a shared user, synchronizing with the service providing apparatus 120, and using a material search in the future.

Referring to FIG. 38, as compared with the descriptions in FIGS. 12 to 14, the embodiment shown in FIG. 38 differs from FIGS. 12 to 14 in that a content source is material created by another user. Therefore, the descriptions in FIGS. 12 to 14 substitute for detailed descriptions of FIG. 38.

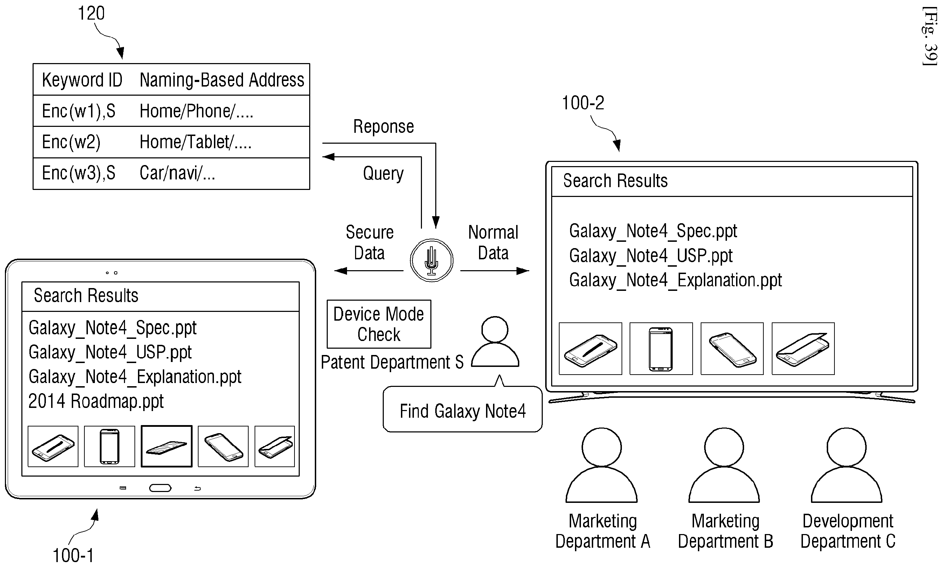

FIG. 39 is a view showing a scenario showing search results which are split according to an embodiment of the present disclosure.

Referring to FIG. 39, in displaying the search result values, the search results values may be split in such a manner that the result value requiring security is displayed on a user's personal terminal, whereas the general search result value is displayed on a public device.

To achieve this, the user terminal 1 100-1 or the user terminal 2 100-2 may determine the context of the device prior to displaying the received search result values on the screen. For example, the user terminal 1 100-1 or the user terminal 2 100-2 additionally determines whether it is connected with an external device and whether the external device is a public device such as a TV as a result of identifying device information, and processes the search result values such that the general search result is displayed on the public device.

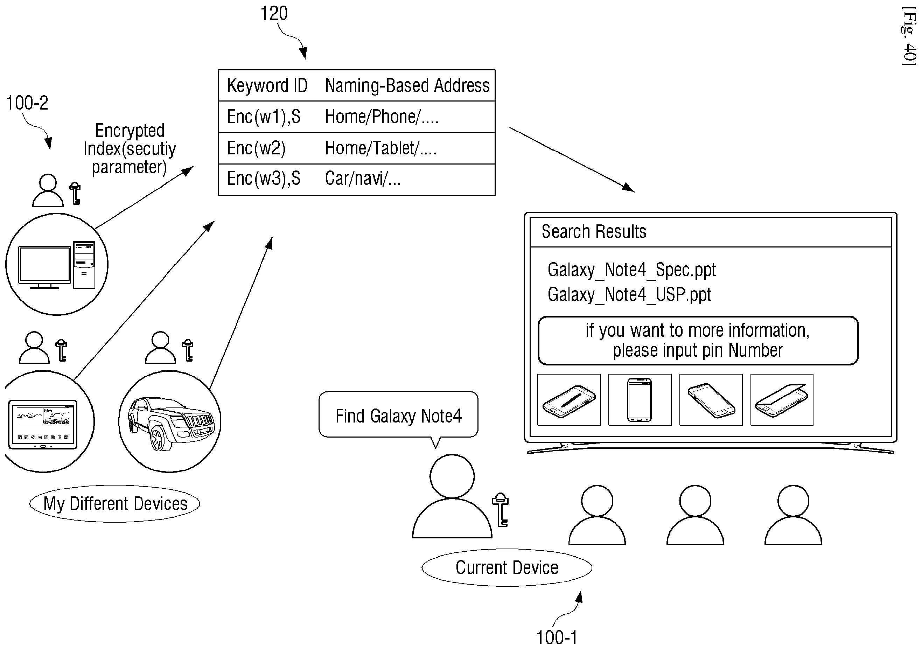

FIG. 40 is a view showing a scenario of displaying a search result value on a public device according to a security level according to an embodiment of the present disclosure.

Referring to FIG. 40, each device generates a security level of the device when generating an index, and stores the security level in the cloud (i.e., the service providing apparatus 120) and may display content on the public device according to the security level when the user searches the contents in the public device.

Even when various devices of the same user are designated as search devices, the public device does not display content having a high security level considering the security level of the public device.

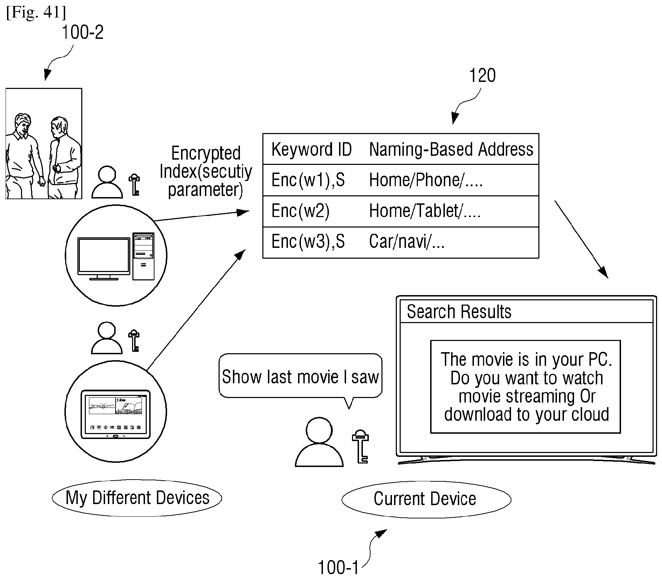

FIG. 41 is a view showing a scenario of analyzing search results and showing the result of analysis according to an embodiment of the present disclosure.

Referring to FIG. 41, when a current device (i.e., the user terminal 1 100-1) receives encrypted search results which are searched based on a user's semantic query, the current device analyzes the search results by decrypting the search results and displays the result of analysis for the user.

For example, when the user generates a query saying "please show me the movie that I saw last time," the service providing apparatus 120 extracts indexing information from the search DB using the search token on the corresponding query, and provides the indexing information to the user terminal 1 100-1. The user terminal 1 100-1 may generate the search results using meta information in the indexing information, and may show the search result "Your PC has the movie." by analyzing the search result.

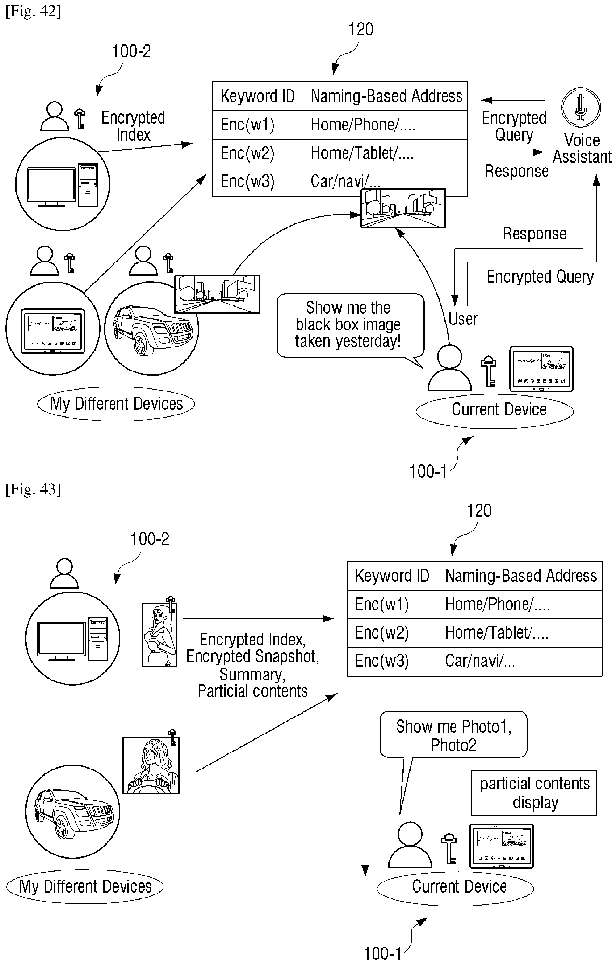

FIG. 42 is a view showing a scenario showing a device which is authorized to access or sharing materials according to an embodiment of the present disclosure.

Referring to FIG. 42, when additional access authority (token) for the indexing information is given, a corresponding device may be accessed or a corresponding material may be automatically uploaded to a specific cloud (i.e., the service providing apparatus 120) and thus can be shared.

For example, when authority to access a dashboard camera image of a car from among a plurality of user terminals 2 100-2 is given, the user terminal 1 100-1 can access corresponding material from the corresponding device or the service providing apparatus 120.

FIG. 43 is a view showing a scenario showing a part of search results when a content is stored in an external device according to an embodiment of the present disclosure.

Referring to FIG. 43, when the content is stored in a device other than the user terminal 1 100-1 which is currently used by the user, as a result of searching (i.e., when the content is stored in the user terminal 2 100-2) this may be identified through URI information. Therefore, only a partial image of the content may be displayed. For example, the content may be displayed in the form of abstract or a snapshot or a thumbnail image.

Only the partial image is provided when the content is not identified as being stored in the search device.

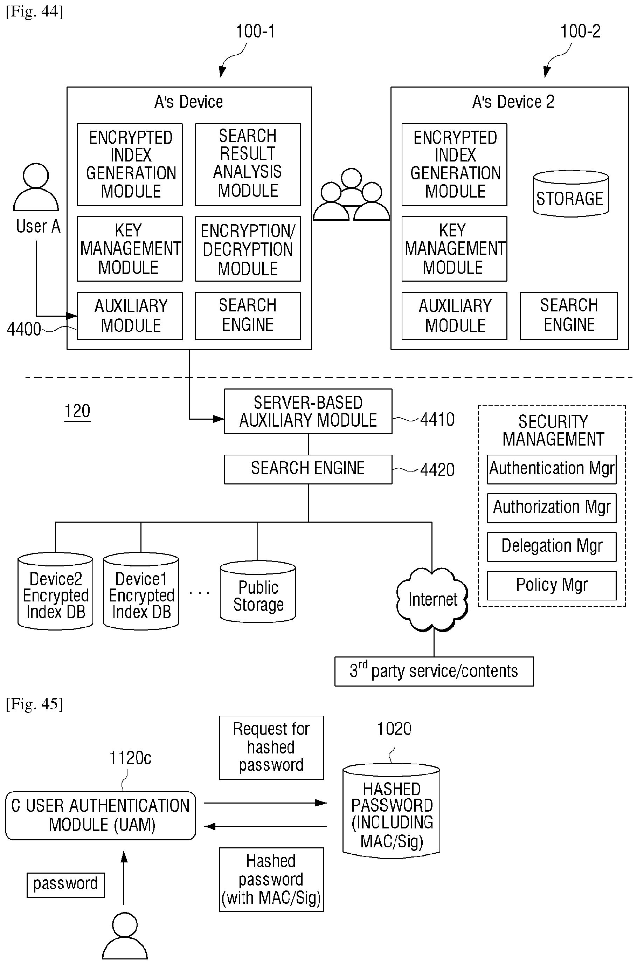

FIG. 44 is a view to illustrate a process of searching a content using an auxiliary module according to an embodiment of the present disclosure.

Referring to FIG. 44, the user terminal 1 100-1 may receive input of a voice query using the query conversion module 990 of FIG. 9 such as Samsung™ S-voice as an auxiliary module 4400. The user terminal 1 100-1 may analyze the input query and convert search term information according to a format of indexing information through the query conversion module 990. The search term information converted in this way may be transmitted to a server-based auxiliary module 4410 of the service providing apparatus 120 in the form of a token. The server-based auxiliary module 4410 may be the authentication management module 1120c or the signature module 950 of FIG. 11B.

For example, when the authentication is completed, the service providing apparatus 120 extracts indexing information which is searched using the search term information of the corresponding token in the search DB through a search engine 4420, and provides the indexing information to the user terminal 1 100-1 again.

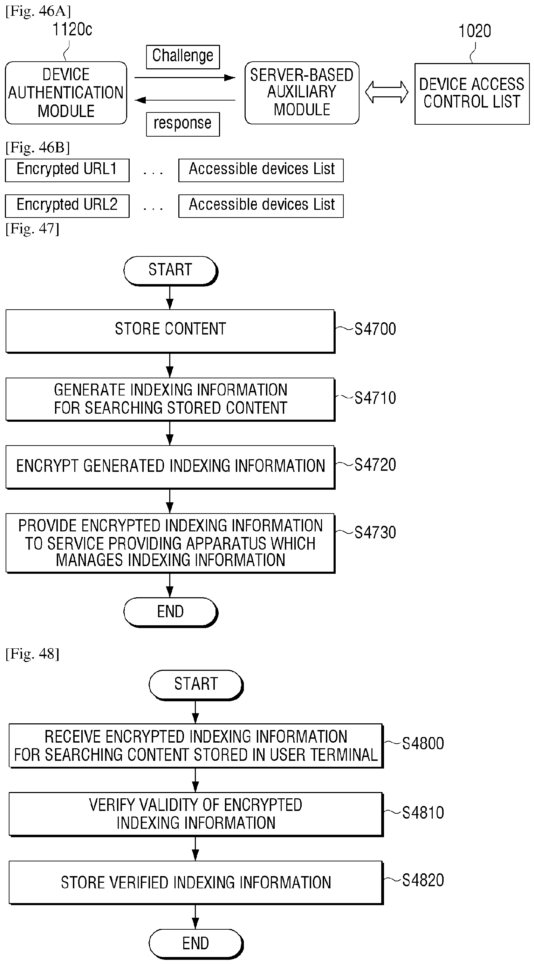

FIG. 45 is a view to illustrate user authentication according to an embodiment of the present disclosure, FIG. 46A is a view to illustrate controlling access authority of a user terminal according to an embodiment of the present disclosure, and FIG. 46B is a view to illustrate controlling access to a device according to data according to an embodiment of the present disclosure.

Referring to FIGS. 45, 46A, and 46B along with FIGS. 10 and 11B for convenience of explanation, the service providing apparatus 120 according to an embodiment of the present disclosure may include the authentication management module 1120c and the storage 1020. The user authentication module of FIG. 45 may be a part of the authentication management module 1120c.

To register a password, the user stores the password through the authentication management module 1120c. The authentication management module 1120c stores a hashed password in the storage 1020. In this case, the hashed password may be stored as an MAC generated by a user's secret key or a signature generated by a user's public key to prevent falsification.

When the password is stored, the authentication management module 1120c may receive a user input password to authenticate the user. The authentication management module 1120c accesses the hashed password stored in the storage 1020 and compares the hash of the input password and the stored password. In this process, when the MAC or signature is used, the validity may be verified. When the hash values are identical, the authentication management module 1120c determines that the user is a valid user.

In addition, to restrict access by an unauthorized user terminal 100, the authentication management module 1120c shares a key with the control module 1120f or the index management module 1120e as a server agent in advance, and authenticates the device ID with the server agent using the key. The server agent may identify access authority of the authenticated user terminal 100 through a device access control list. The list may be generated by the user, and may be prevented from being falsified using the MAC or signature when the list is stored in the server (i.e., the storage 1020). The devices in the list are defined as a group and the group may be controlled to have the same access authority. The authority may be defined for each device.

In this case, referring to FIG. 46B, access authority by a device may be separately defined according to uniform resource locator (URL) stored in the service providing apparatus 120, and access authority may be given to a group (or set) of specific devices. The list may include e a list of devices which can access encrypted URL.

Up to now, the user/device authenticating process performed in the service providing apparatus 120 has been described. However, a separate user/device authentication method may be applied according to a system designer, and the authentication may be performed in the user terminal 100. Therefore, the various embodiments of the present disclosure are not limited to the above-described explanations.

FIG. 47 is a flowchart showing a driving process of a user terminal according to an embodiment of the present disclosure.

Referring to FIG. 47 along with FIG. 1, the user terminal 100 according to an embodiment of the present disclosure may store content therein at operation S4700.

The user terminal 100 generates indexing information for searching the stored content through the search DB of the service providing apparatus 120 at operation S4710. When the user terminal 100 subscribes to a service for storing the indexing information in the service providing apparatus 120 and using, the user terminal 100 detects a request for generation of the indexing information when storing the contents, and provides a user interface (UI) screen for the user and thus asks the user whether to generate the indexing information through the UI screen. When the user agrees to generate the indexing information, the user terminal 100 may generate indexing information related to the stored content.

To generate the indexing information, the user terminal 100 obtains a location where the content is stored, that is, address information, generates meta data using the content, determines a security level according to a security policy with reference to the meta data generated according to a content type, and generates security information. In addition, the user terminal 100 determines an indexing target according to the content type, extracts a target value corresponding to the determined indexing target, and generates search term information. In this case, the indexing target may be referred to as keyword information and the keyword information may be included in the meta data.

The user terminal 100 encrypts the indexing information which is generated in the above-described process at operation S4720. For example, the user terminal 100 encrypts the URI information (i.e., the address information) encrypts the meta information, and encrypts keyword information, but may not encrypt the security information since the security information is already in a state in which falsification is prevented. In addition, the indexing information may further include signature information to prevent falsification in the process of being transmitted to the service providing apparatus 120.

The user terminal 100 provides the encrypted indexing information to the service providing apparatus 120 in operation S4730.

The indexing information on a certain content X stored in the service providing apparatus 120 may be stored in the users' respective indexing information table.

In addition, the indexing information stored in the search DB of the service providing apparatus 120 may be used for various operations, such as searching the indexing information for searching the content of the user, modifying the indexing information to share the content, and deleting the indexing information to delete the content. These operations have been fully described above and thus a detailed description thereof is omitted.

FIG. 48 is a flowchart showing a driving process of a service providing apparatus according to an embodiment of the present disclosure.

Referring to FIG. 1 along with FIG. 48 for convenience of explanation, the service providing apparatus 120 according to an embodiment of the present disclosure receives encrypted indexing information for searching a content stored in the user terminal 100 at operation S4800.

The service providing apparatus 120 may verify the validity of the encrypted indexing information at operation S4810. The validity may be verified based on an electronic signature or may be verified by a separate verification process using an authentication protocol. Prior to verifying the validity, the service providing apparatus 120 may additionally authenticate the user/device of the user terminal 100.

When the validity is verified, the service providing apparatus 120 stores the encrypted indexing information for each user in the search DB at operation S4820.

When an indexing information table for a certain content X is generated, the service providing apparatus 120 may perform various operations such as searching indexing information according to a user's request, changing indexing information, and deleting indexing information . These operations have been fully described above and thus a detailed explanation thereof is omitted.

Although all of the elements of the various embodiments of the present disclosure are described as being combined into a single element or being operated in combination, the present disclosure is not necessarily limited to these embodiments. One or more elements of all of the elements may be selectively combined and operated within the scope of the object of the present disclosure. In addition, each of the elements may be implemented by a single piece of independent hardware, but some or all of the elements may be selectively combined and may be implemented as a computer program having a program module for performing a part or entirety of the combined functions in a single piece of hardware or a plurality of pieces of hardware. Codes and code segments constituting the computer program may be easily inferred by a person skilled in the art. The computer program may be stored in a non-transitory computer readable medium, and is read and executed by the computer and thus implements the various embodiments of the present disclosure.

The non-transitory computer readable medium refers to a medium that stores data semi-permanently rather than storing data for a very short time, such as a register, a cache, a memory or etc., and is readable by an apparatus. Specifically, the above-described programs may be stored in the non-transitory computer readable medium, such as a compact disc (CD), a digital versatile disc (DVD), a hard disk, a Blu-ray disc, a universal serial bus (USB), a memory card, a ROM etc.

## Claims

1. A user terminal (100-1) comprising:
a storage (630) configured to store content; and
an indexing information processor (610) configured to:
generate indexing information (200, 210, 220, 230, 240, 250) for searching the stored content,
encrypt the generated indexing information,
provide the encrypted indexing information to a service providing apparatus (120) which manages the encrypted indexing information, and
in response to receiving a request, which is generated based on the encrypted indexing information, from an external user terminal (100-2), provide the content to the external user terminal.

2. The user terminal of claim 1, wherein the indexing information processor (610) is further configured to:
generate the indexing information (200, 210, 220, 230, 240, 250) which comprises address information of the content which is used when the content is searched, security information which is related to a security level of the content, and keyword information which is determined according to the security level.

3. The user terminal of claim 2,
wherein the indexing information further comprises meta information (210) of the content and signature information on a person who has authority over the content,
wherein the security level is determined with reference to the meta information, and
wherein the signature information is used when the encrypted address information, the encrypted meta information, and the security information are verified.

4. The user terminal of claim 2, wherein the indexing information processor (610) is further configured to:
determine different indexing objects for a first content and a second content, and
use the determined indexing objects and terms corresponding to the determined indexing objects as the keyword information.

5. The user terminal of claim 2,
wherein the indexing information processor (610) is further configured to modify the security information (230) in order to share the encrypted indexing information with a second user who is different from a first user who stores the content and searches the content, and
wherein authority information for modifying the security information is encrypted and provided to the service providing apparatus.

6. The user terminal of claim 2,
wherein the indexing information processor (610) is further configured to:
receive semantic query information for searching the indexing information related to the content, and
change the received semantic query information to correspond to the keyword information, and
create a token based upon the changed semantic query information and provide the token to the service providing apparatus (120).

7. A method of a user terminal (100-1), the method comprising:
storing content;
generating indexing information (200, 210, 220, 230, 240, 250) for searching the stored content;
encrypting the generated indexing information; providing the encrypted indexing information to a service providing apparatus (120) which manages indexing information; and
in response to receiving a request, which is generated based on the encrypted indexing information, from an external user terminal (100-2), provide the content to the external user terminal.

8. The method of claim 7, wherein the generating of the indexing information (200, 210, 220, 230, 240, 250) comprises generating the indexing information, which comprises address information of the content which is used when the content is searched, security information which is related to a security level of the content, and keyword information which is determined according to the security level.

9. The method of claim 8,
wherein the indexing information (200, 210, 220, 230, 240, 250) further comprises meta information (210) of the content and signature information on a person who has authority over the content,
wherein the security level is determined with reference to the meta information, and wherein the signature information is used when the encrypted address information, the encrypted meta information, and the security information are verified.

10. The method of claim 8, wherein the generating of the indexing information (200, 210, 220, 230, 240, 250) comprises:
determining different indexing objects for a first content and a second content; and
using the determined indexing objects and terms corresponding to the determined indexing objects, as the keyword information.

11. The method of claim 8, further comprising:
modifying the security information in order to share the encrypted indexing information with a second user who is different from a first user who stores the content and searches the content,
wherein authority information for modifying the security information is encrypted and provided to the service providing apparatus.

12. The method of claim 8, further comprising:
receiving semantic query information for searching the indexing information related to the content;
changing the received semantic query information to correspond to the keyword information; and
creating a token based upon the changed semantic query information and providing the the token to the service providing apparatus.

13. The method of claim 7, further comprising:
displaying the indexing information searched in the service providing apparatus on a screen (620) as search results of the content,
wherein the displaying of the indexing information comprises differently displaying the search results on the screen based on at least one of the security level and a context of the user terminal.

## Patentansprüche

1. Benutzerendgerät (100-1), umfassend:
einen Speicher (630), der dazu ausgestaltet ist, Inhalt zu speichern; und
einen Prozessor (610) für Indexierungsinformationen, der ausgestaltet ist zum:
Erzeugen von Indexierungsinformationen (200, 210, 220, 230, 240, 250) zum Durchsuchen des gespeicherten Inhalts,
Verschlüsseln der erzeugten Indexierungsinformationen,
Bereitstellen der verschlüsselten Indexierungsinformationen an eine Diensterbringungseinrichtung (120), welche die verschlüsselten Indexierungsinformationen verwaltet, und
als Reaktion auf den Empfang einer Anforderung, die auf der Basis der verschlüsselten Indexierungsinformationen erzeugt wird, von einem externen Benutzergerät (100-2), Bereitstellen des Inhaltes an das externe Benutzerendgerät.

2. Benutzerendgerät nach Anspruch 1, wobei der Prozessor (610) für Indexierungsinformationen ferner ausgestaltet ist zum:
Erzeugen von den Indexierungsinformationen (200, 210, 220, 230, 240, 250), die Adresseninformationen des Inhalts, die verwendet werden, wenn der Inhalt durchsucht wird, Sicherheitsinformationen, die sich auf ein Sicherheitsniveau des Inhalts beziehen, und Keyword-Informationen, die gemäß dem Sicherheitsniveau bestimmt werden, umfassen.

3. Benutzerendgerät nach Anspruch 2, wobei die Indexierungsinformationen ferner Metainformationen (210) des Inhalts und Signaturinformationen über eine Person, die Autorität über den Inhalt besitzt, umfassen,
wobei das Sicherheitsniveau mit Bezug auf die Metainformationen bestimmt wird und wobei die Signaturinformationen verwendet werden, wenn die verschlüsselten Adresseninformationen, die verschlüsselten Metainformationen und die Sicherheitsinformationen verifiziert werden.

4. Benutzerendgerät nach Anspruch 2, wobei der Prozessor (610) für Indexierungsinformationen ferner ausgestaltet ist zum:
Bestimmen verschiedener Indexierungsobj ekten für einen ersten Inhalt und einen zweiten Inhalt, und
Verwenden der bestimmten Indexierungsobjekte und Termini, die den bestimmten Indexierungsobjekten entsprechen, als die Keyword-Informationen.

5. Benutzerendgerät nach Anspruch 2,
wobei der Prozessor (610) für Indexierungsinformationen ferner dazu ausgestaltet ist, die Sicherheitsinformationen (230) zu modifizieren, um die verschlüsselten Indexierungsinformationen mit einem zweiten Benutzer zu teilen, der ein anderer ist als ein erster Nutzer, der den Inhalt speichert und den Inhalt durchsucht, und
wobei die Autoritätsinformationen zum Modifizieren der Sicherheitsinformationen verschlüsselt und der Diensterbringungseinrichtung bereitgestellt sind.

6. Benutzerendgerät nach Anspruch 2,
wobei der Prozessor (610) für Indexierungsinformationen ferner konfiguriert ist zum:
Empfangen von semantischen Abfrageinformationen zum Durchsuchen der Indexierungsinformationen, die sich auf den Inhalt beziehen, und
Ändern der empfangenen semantischen Abfrageinformationen, sodass sie den Keyword-Informationen entsprechen, und
Erstellen eines Tokens auf der Basis der veränderten semantischen Abfrageinformationen und Bereitstellen des Tokens an die Diensterbringungseinrichtung (120).

7. Verfahren eines Benutzerendgeräts (100-1), wobei das Verfahren Folgendes umfasst:
Speichern von Inhalt;
Erzeugen von Indexierungsinformationen (200, 210, 220, 230, 240, 250) zum Durchsuchen des gespeicherten;
Verschlüsseln der erzeugten Indexierungsinformationen; Bereitstellen der verschlüsselten Indexierungsinformationen an eine Diensterbringungseinrichtung (120), welche die Indexierungsinformationen verwaltet, und
als Reaktion auf den Empfang einer Anforderung, die auf der Basis der verschlüsselten Indexierungsinformationen erzeugt wird, von einem externen Benutzergerät (100-2), Bereitstellen des Inhaltes an das externe Benutzerendgerät.

8. Verfahren nach Anspruch 7, wobei das Erzeugen von den Indexierungsinformationen (200, 210, 220, 230, 240, 250) das Erzeugen von Indexierungsinformationen umfasst, die Adresseninformationen des Inhalts, die verwendet werden, wenn der Inhalt durchsucht wird, Sicherheitsinformationen, die sich auf ein Sicherheitsniveau des Inhalts beziehen, und Keyword-Informationen, die gemäß dem Sicherheitsniveau bestimmt werden, umfassen.

9. Verfahren nach Anspruch 8,
wobei die Indexierungsinformationen (200, 210, 220, 230, 240, 250) ferner Metainformationen (210) des Inhalts und Signaturinformationen über eine Person, die Autorität über den Inhalt besitzt, umfassen,
wobei das Sicherheitsniveau mit Bezug auf die Metainformationen bestimmt wird, und
wobei die Signaturinformationen verwendet werden, wenn die verschlüsselten Adresseninformationen, die verschlüsselten Metainformationen und die Sicherheitsinformationen verifiziert werden.

10. Verfahren nach Anspruch 8, wobei das Erzeugen der Indexierungsinformationen (200, 210, 220, 230, 240, 250) Folgendes umfasst:
Bestimmen verschiedener Indexierungsobj ekten für einen ersten Inhalt und einen zweiten Inhalt; und
Verwenden der bestimmten Indexierungsobjekte und Termini, die den bestimmten Indexierungsobjekten entsprechen, als die Keyword-Informationen.

11. Verfahren nach Anspruch 8, ferner umfassend:
Modifizieren der Sicherheitsinformationen, um die verschlüsselten Indexierungsinformationen mit einem zweiten Benutzer zu teilen, der ein anderer ist als ein erster Nutzer, der den Inhalt speichert und den Inhalt durchsucht,
wobei die Autoritätsinformationen zum Modifizieren der Sicherheitsinformationen verschlüsselt und der Diensterbringungseinrichtung bereitgestellt sind.

12. Verfahren nach Anspruch 8, ferner umfassend:
Empfangen von semantischen Abfrageinformationen zum Durchsuchen der Indexierungsinformationen, die sich auf den Inhalt beziehen;
Ändern der empfangenen semantischen Abfrageinformationen, sodass sie den Keyword-Informationen entsprechen; und
Erstellen eines Tokens auf der Basis der veränderten semantischen Abfrageinformationen und Bereitstellen des Tokens an die Diensterbringungseinrichtung.

13. Verfahren nach Anspruch 7, ferner umfassend:
Anzeigen der Indexierungsinformationen, die in der Diensterbringungseinrichtung durchsucht werden, auf einem Bildschirm (620) als Suchresultate des Inhalts,
wobei das Anzeigen der Indexierungsinformationen verschiedenartiges Anzeigen der Suchresultate auf dem Bildschirm auf der Basis von mindestens einem aus einem Sicherheitsniveau und einem Kontext des Benutzerendgeräts umfassen.

## Revendications

1. Terminal d'utilisateur (100-1) comprenant :
une mémoire (630) prévue pour stocker un contenu ; et
un processeur d'informations d'indexation (610) prévu pour :
générer des informations d'indexation (200, 210, 220, 230, 240, 250) pour rechercher le contenu mémorisé,
crypter les informations d'indexation générées,
délivrer les informations d'indexation cryptées à un dispositif de fourniture de services (120) gérant les informations d'indexation cryptées, et
en réponse à la réception d'une demande générée sur la base des informations d'indexation cryptées, provenant d'un terminal d'utilisateur extérieur (100-2), fournir le contenu au terminal d'utilisateur extérieur.

2. Terminal d'utilisateur selon la revendication 1, où le processeur d'informations d'indexation (610) est en outre prévu pour :
générer les informations d'indexation (200, 210, 220, 230, 240, 250) comprenant des informations d'adresse du contenu utilisées quand le contenu est recherché, des informations de sécurité relatives à un niveau de sécurité du contenu, et des informations de mot-clé déterminées en fonction du niveau de sécurité.

3. Terminal d'utilisateur selon la revendication 2, où les informations d'indexation comprennent en outre des méta-informations (210) du contenu et des informations de signature sur une personne ayant autorité sur le contenu,
où le niveau de sécurité est déterminé en référence aux méta-informations, et
où les informations de signature sont utilisées quand les informations d'adresse cryptées, les méta-informations cryptées et les informations de sécurité sont vérifiées.

4. Terminal d'utilisateur selon la revendication 2, où le processeur d'informations d'indexation (610) est en outre prévu pour :
déterminer différents objets d'indexation pour un premier contenu et un deuxième contenu, et
utiliser les objets d'indexation déterminés et les termes correspondant aux objets d'indexation déterminés en tant qu'informations de mot-clé.

5. Terminal d'utilisateur selon la revendication 2,
où le processeur d'informations d'indexation (610) est en outre prévu pour modifier les informations de sécurité (230) afin de partager les informations d'indexation cryptées avec un deuxième utilisateur différent d'un premier utilisateur stockant le contenu et recherchant le contenu, et
où des informations d'autorité pour modifier les informations de sécurité sont cryptées et délivrées au dispositif de fourniture de services.

6. Terminal d'utilisateur selon la revendication 2,
où le processeur d'informations d'indexation (610) est en outre prévu pour :
recevoir des informations de demande sémantique pour rechercher les informations d'indexation relatives au contenu, et
modifier les informations de demande sémantique reçues pour correspondre aux informations de mot-clé, et
créer un jeton sur la base des informations de demande sémantique modifiées et délivrer le jeton au dispositif de fourniture de services (120).

7. Procédé de terminal d'utilisateur (100-1), ledit procédé comprenant :
la mémorisation d'un contenu ;
la génération d'informations d'indexation (200, 210, 220, 230, 240, 250) pour rechercher le contenu mémorisé ;
le cryptage des informations d'indexation générées ; la délivrance des informations d'indexation cryptées à un dispositif de fourniture de services (120) gérant les informations d'indexation ; et
en réponse à la réception d'une demande générée sur la base des informations d'indexation cryptées, provenant d'un terminal d'utilisateur extérieur (100-2), délivrer le contenu au terminal d'utilisateur extérieur.

8. Procédé selon la revendication 7, où la génération des informations d'indexation (200, 210, 220, 230, 240, 250) comprend la génération des informations d'indexation comprenant des informations d'adresse du contenu utilisées quand le contenu est recherché, des informations de sécurité relatives à un niveau de sécurité du contenu, et des informations de mot-clé déterminées en fonction du niveau de sécurité.

9. Procédé selon la revendication 8,
où les informations d'indexation (200, 210, 220, 230, 240, 250) comprennent en outre des méta-informations (210) du contenu et des informations de signature sur une personne ayant autorité sur le contenu,
où le niveau de sécurité est déterminé en référence aux méta-informations, et
où les informations de signature sont utilisées quand les informations d'adresse cryptées, les méta-informations cryptées et les informations de sécurité sont vérifiées.

10. Procédé selon la revendication 8, où la génération des informations d'indexation (200, 210, 220, 230, 240, 250) comprend :
la détermination de différents objets d'indexation pour un premier contenu et un deuxième contenu ; et
l'utilisation des objets d'indexation déterminés et des termes correspondant aux objets d'indexation déterminés en tant qu'informations de mot-clé.

11. Procédé selon la revendication 8, comprenant en outre :
la modification des informations de sécurité afin de partager les informations d'indexation cryptées avec un deuxième utilisateur différent d'un premier utilisateur stockant le contenu et recherchant le contenu, et
où des informations d'autorité pour modifier les informations de sécurité sont cryptées et délivrées au dispositif de fourniture de services.

12. Procédé selon la revendication 8, comprenant en outre :
la réception d'informations de demande sémantique pour rechercher les informations d'indexation relatives au contenu ;
la modification des informations de demande sémantique reçues pour correspondre aux informations de mot-clé ; et
la création d'un jeton sur la base des informations de demande sémantique reçues et la délivrance du jeton au dispositif de fourniture de services.

13. Procédé selon la revendication 7, comprenant en outre :
l'affichage des informations d'indexation recherchées dans le dispositif de fourniture de services sur un écran (620) en tant que résultats de recherche du contenu,
où l'affichage des informations d'indexation comprend l'affichage différencié des résultats de recherche à l'écran sur la base du niveau de sécurité et/ou d'un contexte du terminal d'utilisateur.
